# EUROPEAN PATENT APPLICATION

(11) **EP 4 667 414 A1**
(43) Date of publication of application: **24.12.2025**
(21) Application number: 24756749.8
(22) Date of filing: 06.02.2024
(51) Int. Cl.: C01B 32/05, C25B 11/052, C25B 11/065, C25B 11/081, H01M 4/90, H01M 4/96, H01M 8/10, H01M 12/06, H01M 12/08

(54) **CARBON CARRIER, METAL-SUPPORTED CATALYST, ELECTRODE, AND BATTERY**

(30) Priority: 15.02.2023 JP 2023021547
(71) Applicant: Nisshinbo Holdings Inc., Tokyo 103-8650 (JP)
(72) Inventor: KISHIMOTO, Takeaki, Chiba-shi, Chiba 267-0056 (JP); CUI, Siyang, Chiba-shi, Chiba 267-0056 (JP); KOBAYASHI, Yoshikazu, Chiba-shi, Chiba 267-0056 (JP); ICHIKAWA, Akira Faxon, Chiba-shi, Chiba 267-0056 (JP); TAKEDA, Kazuki, Chiba-shi, Chiba 267-0056 (JP)
(74) Representative: Vossius & Partner Patentanwälte Rechtsanwälte mbB
(86) International application number: PCT/JP2024/003928
(87) International publication number: WO 2024/171901

(57) **Abstract**

Provided are a carbon carrier that achieves both the durability and catalytic activity of a metal-supported catalyst, and a metal-supported catalyst, an electrode, and a battery. The carbon carrier is a carbon carrier for supporting catalyst metal particles, having: a BET specific surface area of 300 m²/g or more; a true density of 2.1 g/cm³ or more; and a carbon structure which exhibits one or more selected from the group consisting of the following characteristics (i) and (ii) in a Raman spectrum obtained by Raman spectroscopy: (i) a ratio of an intensity of a D band having a peak top at a Raman shift of around 1,340 cm⁻¹ to an intensity of a G band having a peak top at a Raman shift of around 1,580 cm⁻¹ is 1.6 or more; and (ii) a ratio of an intensity of a 2D band having a peak top at a Raman shift of around 2,700 cm⁻¹ to the intensity of the G band having a peak top at a Raman shift of around 1,580 cm⁻¹ is 0.3 or more.

## Description

### Technical Field

The present invention relates to a carbon carrier, a metal-supported catalyst, an electrode, and a battery.

### Background Art

In Patent Literature 1, there are descriptions of a carbon carrier, which is obtained by subjecting carbon black or activated carbon to heat treatment at from 1,800°C to 2,500°C, and which has an average lattice spacing d₀₀₂ between [002] planes of from 0.337 nm to 0.348 nm, a crystallite size Lc₍₀₀₂₎ of from 3 nm to 18 nm, and a specific surface area of from 70 m²/g to 800 m²/g, and an electrode catalyst including platinum or a platinum alloy that are supported on the carbon carrier.

In Patent Literature 2, there are descriptions of graphitized carbon black, which is obtained by subjecting a mixture containing carbon black and a graphitization promoting substance to heat treatment at from 2,000°C to 2,500°C, and a catalyst for a phosphoric acid fuel cell obtained by supporting platinum on the graphitized carbon black.

### Citation List

### Patent Literature

[PTL 1] JP 2000-268828 A
[PTL 2] JP 2000-273351 A

### Summary of Invention

### Technical Problem

The inventors of the present invention have observed the following problem: when a carbon material subjected to graphitization treatment is used as the carbon carrier of a metal-supported catalyst, the initial catalytic activity of the metal-supported catalyst reduces, though the durability (e.g., corrosion resistance and/or load fluctuation resistance) of the metal-supported catalyst is improved.

The present invention has been made in view of the above-mentioned problem, and one of the objects of the present invention is to provide a carbon carrier that achieves both the durability and catalytic activity of a metal-supported catalyst, and a metal-supported catalyst, an electrode, and a battery.

### Solution to Problem

[1] In order to solve the above-mentioned problem, according to one embodiment of the present invention, there is provided a carbon carrier for supporting catalyst metal particles, having: a BET specific surface area of 300 m²/g or more; a true density of 2.1 g/cm³ or more; and a carbon structure which exhibits one or more selected from the group consisting of the following characteristics (i) and (ii) in a Raman spectrum obtained by Raman spectroscopy: (i) a ratio of an intensity of a D band having a peak top at a Raman shift of around 1,340 cm⁻¹ to an intensity of a G band having a peak top at a Raman shift of around 1,580 cm⁻¹ is 1.6 or more; and (ii) a ratio of an intensity of a 2D band having a peak top at a Raman shift of around 2,700 cm⁻¹ to the intensity of the G band having a peak top at a Raman shift of around 1,580 cm⁻¹ is 0.3 or more. According to the present invention, there is provided a carbon carrier that achieves both the durability and catalytic activity of a metal-supported catalyst.
[2] The carbon carrier according to the above-mentioned item [1] may include the carbon structure which exhibits the characteristic (i). [3] The carbon carrier according to the above-mentioned item [1] or [2] may include the carbon structure which exhibits the characteristic (ii).
[4] An oxygen content of the carbon carrier according to any one of the above-mentioned items [1] to [3] may be 1.0 wt% or more. [5] The carbon carrier according to any one of the above-mentioned items [1] to [4] may include the carbon structure which exhibits, in the Raman spectrum obtained by the Raman spectroscopy, a half width at half maximum of the G band having a peak top at a Raman shift of around 1,580 cm⁻¹ of 37 cm⁻¹ or less. [6] The carbon carrier according to any one of the above-mentioned items [1] to [5] may include the carbon structure which exhibits, in the Raman spectrum obtained by the Raman spectroscopy, a half width at half maximum of the D band having a peak top at a Raman shift of around 1,340 cm⁻¹ of 38 cm⁻¹ or less. [7] The carbon carrier according to any one of the above-mentioned items [1] to [6] may include the carbon structure which exhibits, in the Raman spectrum obtained by the Raman spectroscopy, a half width at half maximum of the 2D band having a peak top at a Raman shift of around 2,700 cm⁻¹ of 57 cm⁻¹ or less.
[8] The carbon carrier according to any one of the above-mentioned items [1] to [7] may have a volume of pores each having a pore diameter of 5 nm or more and 70 nm or less of 0.50 cm³/g or less. [9] The carbon carrier according to any one of the above-mentioned items [1] to [8] may have a volume of pores each having a pore diameter of less than 5 nm of 0.20 cm³/g or more. [10] The carbon carrier according to any one of the above-mentioned items [1] to [9] may have a ratio of a volume of pores each having a pore diameter of less than 5 nm to a volume of pores each having a pore diameter of 5 nm or more and 70 nm or less of 4.0 or more. [11] The carbon carrier according to any one of the above-mentioned items [1] to [10] may have a pore mode diameter of 7.0 nm or less.
[12] The carbon carrier according to any one of the above-mentioned items [1] to [11] may include a carbon structure which exhibits, in a nitrogen adsorption isotherm obtained by a nitrogen adsorption method at a temperature of 77 K, a difference of 40 cm³/g or less, wherein the difference is obtained by subtracting a nitrogen adsorption amount from a nitrogen desorption amount at a relative pressure (P/P₀), which is a ratio of an adsorption equilibrium pressure (P) to a saturated vapor pressure (P₀), of 0.5 (-). [13] The carbon carrier according to any one of the above-mentioned items [1] to [12] may include a carbon structure which exhibits, in a nitrogen adsorption isotherm obtained by a nitrogen adsorption method at a temperature of 77 K, a difference of 20 cm³/g or less, wherein the difference is obtained by subtracting a nitrogen adsorption amount from a nitrogen desorption amount at a relative pressure (P/P₀), which is a ratio of an adsorption equilibrium pressure (P) to a saturated vapor pressure (P₀), of 0.8 (-).
[14] In order to solve the above-mentioned problem, according to one embodiment of the present invention, there is provided a metal-supported catalyst, including: the carbon carrier of any one of the above-mentioned items [1] to [13]; and catalyst metal particles supported on the carbon carrier. According to the present invention, there is provided a metal-supported catalyst having both of durability and catalytic activity.
[15] In order to solve the above-mentioned problem, according to one embodiment of the present invention, there is provided an electrode, including the metal-supported catalyst of the above-mentioned item [14]. According to the present invention, there is provided an electrode having both of durability and catalytic activity.
[16] In order to solve the above-mentioned problem, according to one embodiment of the present invention, there is provided a battery, including the electrode of the above-mentioned item [15]. According to the present invention, there is provided a battery having both of durability and catalytic activity.

### Advantageous Effects of Invention

The present invention provides a carbon carrier that achieves both the durability and catalytic activity of a metal-supported catalyst, and a metal-supported catalyst, an electrode, and a battery.

### Brief Description of Drawings

FIG. 1 shows a Raman spectrum obtained for a carbon carrier of Example 1 in Examples according to an embodiment of the present invention.
FIG. 2 shows a nitrogen adsorption isotherm obtained for the carbon carrier of Example 1 in Examples according to this embodiment.
FIG. 3A shows pore diameter distributions obtained for carbon carriers of Example C1 and Example C3 in Examples according to this embodiment.
FIG. 3B shows pore diameter distributions obtained for carbon carriers of Example C5, Example C7, and Example 2 in Examples according to this embodiment.
FIG. 4A shows an example of the evaluation results of the characteristics of the carbon carriers in Examples according to this embodiment.
FIG. 4B shows another example of the evaluation results of the characteristics of the carbon carriers in Examples according to this embodiment.
FIG. 4C shows the evaluation results of the performances of metal-supported catalysts in Examples according to this embodiment.

### Description of Embodiments

One of the embodiments of the present invention will be described below. However, the present invention is not limited to examples described in this embodiment.

A carbon carrier according to an embodiment of the present invention (hereinafter referred to as "carrier of the present invention") is a porous carbon material mainly including carbon. The carbon content of the carrier of the present invention is not particularly limited as long as the effects of the present invention are obtained. However, for example, the carbon content may be 70 wt% or more, and is preferably 75 wt% or more, more preferably 80 wt% or more, and particularly preferably 85 wt% or more.

In addition, for example, the carbon content of the carrier of the present invention may be 100 wt% or less, may be 95 wt% or less, or may be 90 wt% or less. The carbon content of the carrier of the present invention may be specified by freely combining any one of the above-mentioned lower limit values and any one of the above-mentioned upper limit values. The carbon content of the carbon carrier is obtained by elemental analysis (specifically, a combustion method).

The true density of the carrier of the present invention is not particularly limited as long as the effects of the present invention are obtained. However, for example, the true density may be 1.8 g/cm³ or more, and is preferably 1.9 g/cm³ or more, more preferably 2.0 g/cm³ or more, still more preferably 2.1 g/cm³ or more, still more preferably 2.2 g/cm³ or more, and particularly preferably 2.3 g/cm³ or more.

In addition, for example, the true density of the carrier of the present invention may be 2.6 g/cm³ or less, may be 2.5 g/cm³ or less, may be 2.4 g/cm³ or less, may be 2.3 g/cm³ or less, may be 2.2 g/cm³ or less, or may be 2.1 g/cm³ or less. The true density of the carrier of the present invention may be specified by freely combining any one of the above-mentioned lower limit values and any one of the above-mentioned upper limit values. The true density of a carbon carrier is obtained by a constant volume expansion method.

Herein, the measured value of the true density obtained by the constant volume expansion method of a porous carbon material having closed pores is generally smaller than that of a solid carbon material. In addition, for example, when the porous carbon material is subjected to graphitization treatment, some of its pores are closed to increase the volume of the closed pores. As a result, the measured value of the true density of the carbon material after the graphitization treatment becomes smaller than that before the graphitization treatment. As described above, the true density of a carbon material reflects the volume of closed pores in the carbon material.

On the other hand, when a porous carbon material is used as a carbon carrier for supporting catalyst metal particles, closed pores in the carbon material are useless space that cannot support the catalyst metal particles. Accordingly, the relatively large true density of the carrier of the present invention, which reflects the fact that the volume of the closed pores is small, means that the carrier of the present invention has a porous structure suitable for use as a carbon carrier for supporting the catalyst metal particles. Specifically, for example, when the carrier of the present invention is a carbon material subjected to oxidation treatment after graphitization treatment, its pores that have been closed once by the graphitization treatment are opened again by the oxidation treatment. As a result, the carrier of the present invention has a true density larger than that of the carbon material before the oxidation treatment. The increase in true density by the oxidation treatment contributes to an improvement in catalytic activity of a metal-supported catalyst including the catalyst metal particles supported on the carrier of the present invention because the increase of the true density increases the surface and space available for supporting the catalyst metal particles in the carrier of the present invention.

The carrier of the present invention preferably includes a carbon structure exhibiting, in its Raman spectrum obtained by Raman spectroscopy, a half width at half maximum of a G band having a peak top at a Raman shift of around 1,580 cm⁻¹ (specifically, for example, in the range of 1,550 cm⁻¹ or more and 1,610 cm⁻¹ or less) (hereinafter referred to as "Raman G half width at half maximum") of 37 cm⁻¹ or less.

In this case, the Raman G half width at half maximum of the carrier of the present invention is more preferably 36 cm⁻¹ or less, still more preferably 35 cm⁻¹ or less. In addition, the Raman G half width at half maximum of the carrier of the present invention is still more preferably 34 cm⁻¹ or less, still more preferably 33 cm⁻¹ or less, still more preferably 32 cm⁻¹ or less, still more preferably 31 cm⁻¹ or less, still more preferably 30 cm⁻¹ or less, still more preferably 29 cm⁻¹ or less, and particularly preferably 28 cm⁻¹ or less.

In addition, for example, the Raman G half width at half maximum of the carrier of the present invention may be 10 cm⁻¹ or more, may be 15 cm⁻¹ or more, may be 18 cm⁻¹ or more, may be 20 cm⁻¹ or more, may be 22 cm⁻¹ or more, may be 24 cm⁻¹ or more, may be 26 cm⁻¹ or more, may be 27 cm⁻¹ or more, or may be 28 cm⁻¹ or more. The Raman G half width at half maximum of the carrier of the present invention may be specified by freely combining any one of the above-mentioned lower limit values and any one of the above-mentioned upper limit values.

Herein, in the Raman spectrum of a carbon material, a G band is a component derived from a carbon atom which forms graphene. In addition, the half width at half maximum of the G band represents the extent to which the graphene develops. That is, as graphene in a carbon structure develops, the Raman G half width at half maximum of the carbon structure reduces. In this respect, as the graphene develops, the stability of the carbon structure is improved. Accordingly, a carbon structure exhibiting a Raman G half width at half maximum equal to or less than the above-mentioned upper limit values contributes to an improvement in durability of the metal-supported catalyst including the catalyst metal particles supported on the carrier of the present invention.

On the other hand, a carbon structure exhibiting an excessively small Raman G half width at half maximum has poor aptitude for supporting catalyst metal particles because its graphene develops excessively. In contrast, a carbon structure exhibiting a moderately large Raman G half width at half maximum has excellent aptitude for supporting catalyst metal particles because its graphene does not develop excessively, and hence moderately contains strain and/or a heteroatom.

In addition, as graphene develops, the hydrophilicity of a carbon structure reduces. Accordingly, for example, when the metal-supported catalyst is applied to a fuel cell, a carbon structure exhibiting an excessively small Raman G half width at half maximum has poor aptitude for holding produced water. In contrast, a carbon structure exhibiting a moderately large Raman G half width at half maximum has excellent aptitude for holding the produced water because the structure has moderate hydrophilicity.

Accordingly, a carbon structure exhibiting a Raman G half width at half maximum equal to or more than the above-mentioned lower limit values contributes to an improvement in durability and/or catalytic activity of the metal-supported catalyst including the catalyst metal particles supported on the carrier of the present invention (e.g., power generation performance (including power generation performance under a low-humidified condition) in the case where the metal-supported catalyst is applied to a battery).

The carrier of the present invention preferably includes a carbon structure exhibiting, in its Raman spectrum obtained by Raman spectroscopy, a half width at half maximum of a D band having a peak top at a Raman shift of around 1,340 cm⁻¹ (specifically, for example, in the range of 1,320 cm⁻¹ or more and 1,360 cm⁻¹ or less) (hereinafter referred to as "Raman D half width at half maximum") of 38 cm⁻¹ or less.

In this case, the Raman D half width at half maximum of the carrier of the present invention is more preferably 36 cm⁻¹ or less, still more preferably 34 cm⁻¹ or less. In addition, the Raman D half width at half maximum of the carrier of the present invention is still more preferably 32 cm⁻¹ or less, still more preferably 30 cm⁻¹ or less, still more preferably 29 cm⁻¹ or less, still more preferably 28 cm⁻¹ or less, still more preferably 27 cm⁻¹ or less, still more preferably 26 cm⁻¹ or less, still more preferably 25 cm⁻¹ or less, still more preferably 24 cm⁻¹ or less, and particularly preferably 23 cm⁻¹ or less.

In addition, for example, the Raman D half width at half maximum of the carrier of the present invention may be 10 cm⁻¹ or more, may be 15 cm⁻¹ or more, may be 18 cm⁻¹ or more, may be 20 cm⁻¹ or more, may be 21 cm⁻¹ or more, may be 22 cm⁻¹ or more, or may be 23 cm⁻¹ or more. In addition, for example, the Raman D half width at half maximum of the carrier of the present invention may be 24 cm⁻¹ or more, may be 25 cm⁻¹ or more, may be 26 cm⁻¹ or more, may be 27 cm⁻¹ or more, may be 28 cm⁻¹ or more, or may be 29 cm⁻¹ or more. The Raman D half width at half maximum of the carrier of the present invention may be specified by freely combining any one of the above-mentioned lower limit values and any one of the above-mentioned upper limit values.

Herein, according to a reference (A. Sadezky et al., Carbon 43 (2005) 1731-1742), in the Raman spectrum of a carbon material, a D band is a component derived from a carbon atom adjacent to a disordered lattice, such as an edge or defect of a graphene layer. In addition, the half width at half maximum of the D band represents the crystallinity of carbon around the edge or the defect. That is, as the crystallinity of carbon around an edge or a defect in a carbon structure becomes higher, the Raman D half width at half maximum of the carbon structure reduces. In addition, as the crystallinity of the carbon becomes higher, the stability of the carbon structure is improved. Accordingly, a carbon structure exhibiting a Raman D half width at half maximum equal to or less than the above-mentioned upper limit values contributes to an improvement in durability of the metal-supported catalyst including the catalyst metal particles supported on the carrier of the present invention.

On the other hand, a carbon structure exhibiting an excessively small Raman D half width at half maximum has poor aptitude for supporting catalyst metal particles because the crystallinity of carbon around an edge or a defect is excessively high. In contrast, a carbon structure exhibiting a moderately large Raman D half width at half maximum has excellent aptitude for supporting catalyst metal particles because the crystallinity of carbon around an edge or a defect is not excessively high.

In addition, as the crystallinity of carbon becomes higher, the hydrophilicity of a carbon structure reduces. Accordingly, for example, when the metal-supported catalyst is applied to a fuel cell, a carbon structure exhibiting an excessively small Raman D half width at half maximum has poor aptitude for holding produced water. In contrast, a carbon structure exhibiting a moderately large Raman D half width at half maximum has excellent aptitude for holding the produced water because the structure has moderate hydrophilicity.

Accordingly, a carbon structure exhibiting a Raman D half width at half maximum equal to or more than the above-mentioned lower limit values contributes to an improvement in durability and/or catalytic activity of the metal-supported catalyst including the catalyst metal particles supported on the carrier of the present invention (e.g., power generation performance (including power generation performance under a low-humidified condition) in the case where the metal-supported catalyst is applied to a battery).

The carrier of the present invention preferably includes a carbon structure exhibiting, in its Raman spectrum obtained by Raman spectroscopy, a half width at half maximum of a 2D band having a peak top at a Raman shift of around 2,700 cm⁻¹ (specifically, for example, in the range of 2,670 cm⁻¹ or more and 2,730 cm⁻¹ or less) (hereinafter referred to as "Raman 2D half width at half maximum") of 57 cm⁻¹ or less.

In this case, the Raman 2D half width at half maximum of the carrier of the present invention is more preferably 55 cm⁻¹ or less, still more preferably 54 cm⁻¹ or less, still more preferably 53 cm⁻¹ or less. In addition, the Raman 2D half width at half maximum of the carrier of the present invention is still more preferably 52 cm⁻¹ or less, still more preferably 51 cm⁻¹ or less, still more preferably 50 cm⁻¹ or less, still more preferably 49 cm⁻¹ or less, still more preferably 48 cm⁻¹ or less, still more preferably 47 cm⁻¹ or less, still more preferably 46 cm⁻¹ or less, still more preferably 45 cm⁻¹ or less, still more preferably 44 cm⁻¹ or less, still more preferably 43 cm⁻¹ or less, still more preferably 42 cm⁻¹ or less, still more preferably 41 cm⁻¹ or less, still more preferably 40 cm⁻¹ or less, and particularly preferably 39 cm⁻¹ or less.

In addition, for example, the Raman 2D half width at half maximum of the carrier of the present invention may be 10 cm⁻¹ or more, may be 15 cm⁻¹ or more, may be 20 cm⁻¹ or more, may be 25 cm⁻¹ or more, may be 30 cm⁻¹ or more, or may be 32 cm⁻¹ or more. In addition, the Raman 2D half width at half maximum of the carrier of the present invention may be 34 cm⁻¹ or more, may be 36 cm⁻¹ or more, may be 38 cm⁻¹ or more, may be 40 cm⁻¹ or more, may be 42 cm⁻¹ or more, may be 44 cm⁻¹ or more, may be 46 cm⁻¹ or more, may be 48 cm⁻¹ or more, or may be 50 cm⁻¹ or more. The Raman 2D half width at half maximum of the carrier of the present invention may be specified by freely combining any one of the above-mentioned lower limit values and any one of the above-mentioned upper limit values.

Herein, in the Raman spectrum of a carbon material, a 2D band is a component derived from a carbon atom which forms a graphene layer. In addition, the half width at half maximum of the 2D band represents the uniformity of the graphene layer. That is, as a graphene layer in a carbon structure becomes more uniform, the Raman 2D half width at half maximum of the carbon structure reduces. In addition, as the graphene layer becomes more uniform, the stability of the carbon structure is improved. Accordingly, a carbon structure exhibiting a Raman 2D half width at half maximum equal to or less than the above-mentioned upper limit values contributes to an improvement in durability of the metal-supported catalyst including the catalyst metal particles supported on the carrier of the present invention.

On the other hand, a carbon structure exhibiting an excessively small Raman 2D half width at half maximum has poor aptitude for supporting catalyst metal particles because the uniformity of a graphene layer thereof is excessively high. In contrast, a carbon structure exhibiting a moderately large Raman 2D half width at half maximum has excellent aptitude for supporting catalyst metal particles because a graphene layer thereof has a moderate defect or strain.

In addition, as a graphene layer becomes more uniform, the hydrophilicity of a carbon structure reduces. Accordingly, for example, when the metal-supported catalyst is applied to a fuel cell, a carbon structure exhibiting an excessively small Raman 2D half width at half maximum has poor aptitude for holding produced water. In contrast, a carbon structure exhibiting a moderately large Raman 2D half width at half maximum has excellent aptitude for holding the produced water because the structure has moderate hydrophilicity.

Accordingly, a carbon structure exhibiting a Raman 2D half width at half maximum equal to or more than the above-mentioned lower limit values contributes to an improvement in durability and/or catalytic activity of the metal-supported catalyst including the catalyst metal particles supported on the carrier of the present invention (e.g., power generation performance (including power generation performance under a low-humidified condition) in the case where the metal-supported catalyst is applied to a battery).

The carrier of the present invention preferably includes a carbon structure exhibiting, in the Raman spectrum obtained by the Raman spectroscopy, a ratio of the intensity of the above-mentioned D band to the intensity of the above-mentioned G band (hereinafter referred to as "Raman D/G ratio") of 1.6 or more.

In this case, the Raman D/G ratio of the carrier of the present invention is more preferably 1.7 or more, still more preferably 1.8 or more, still more preferably 1.9 or more, and still more preferably 2.0 or more. In addition, the Raman D/G ratio of the carrier of the present invention is still more preferably 2.1 or more, still more preferably 2.2 or more, and particularly preferably 2.3 or more.

In addition, for example, the Raman D/G ratio of the carrier of the present invention may be 4.0 or less, may be 3.5 or less, may be 3.0 or less, may be 2.8 or less, may be 2.6 or less, may be 2.5 or less, may be 2.4 or less, or may be 2.3 or less. In addition, for example, the Raman D/G ratio of the carrier of the present invention may be 2.2 or less, or may be 2.1 or less. The Raman D/G ratio of the carrier of the present invention may be specified by freely combining any one of the above-mentioned lower limit values and any one of the above-mentioned upper limit values.

Herein, the Raman D/G ratio of a carbon material represents the amount of an edge or a defect in a graphene layer in its carbon structure. That is, as the amount of the edge or defect of the graphene layer increases, the Raman D/G ratio of the carbon material increases. In this respect, the edge and the defect function as sites for supporting catalyst metal particles. Accordingly, as the amount of the edge or defect of the graphene layer increases, the aptitude of the carbon structure for supporting catalyst metal particles is improved.

In addition, as the amount of the edge or defect of the graphene layer increases, the hydrophilicity of the carbon structure is improved. For example, when the metal-supported catalyst is applied to a fuel cell, the improvement in hydrophilicity of the carbon structure improves its aptitude for holding produced water.

Accordingly, a carbon structure exhibiting a Raman D/G ratio equal to or more than the above-mentioned lower limit values contributes to an improvement in durability and/or catalytic activity of the metal-supported catalyst including the catalyst metal particles supported on the carrier of the present invention (e.g., power generation performance (including power generation performance under a low-humidified condition) in the case where the metal-supported catalyst is applied to a battery) .

On the other hand, a carbon structure exhibiting an excessively large Raman D/G ratio has reduced durability because the amount of its edge or defect is excessively large. In contrast, a carbon structure exhibiting a moderately large Raman D/G ratio has an appropriate amount of an edge or a defect. Accordingly, a carbon structure exhibiting a Raman D/G ratio equal to or less than the above-mentioned upper limit values contributes to an improvement in durability of the metal-supported catalyst including the catalyst metal particles supported on the carrier of the present invention.

The carrier of the present invention preferably includes a carbon structure exhibiting, in the Raman spectrum obtained by the Raman spectroscopy, a ratio of the intensity of the above-mentioned 2D band to the intensity of the above-mentioned G band (hereinafter referred to as "Raman 2D/G ratio") of 0.3 or more.

In this case, the Raman 2D/G ratio of the carrier of the present invention is more preferably 0.4 or more, still more preferably 0.5 or more, still more preferably 0.6 or more, and particularly preferably 0.7 or more.

In addition, for example, the Raman 2D/G ratio of the carrier of the present invention may be 1.5 or less, may be 1.2 or less, may be 1.0 or less, may be 0.9 or less, may be 0.8 or less, or may be 0.7 or less. In addition, for example, the Raman 2D/G ratio of the carrier of the present invention may be 0.6 or less, may be 0.5 or less, may be 0.4 or less, or may be 0.3 or less. The Raman 2D/G ratio of the carrier of the present invention may be specified by freely combining any one of the above-mentioned lower limit values and any one of the above-mentioned upper limit values.

Herein, the Raman 2D/G ratio of a carbon material represents the number of layers which forms a graphene stack in the carbon structure of the carbon material. That is, when the intensity of the 2D band is higher than the intensity of the G band (Raman 2D/G ratio>1), graphene is formed of a single layer. When the intensity of the 2D band is the same as the intensity of the G band (Raman 2D/G ratio=1), the number of the layers of the graphene stack is about 2. When the intensity of the 2D band is lower than the intensity of the G band (Raman 2D/G ratio<1), the number of the layers of the graphene stack is 3 or more. The specific number of layers stacked is determined from a ratio of the intensity of the 2D band (the height of its peak top) to the intensity of the G band (the height of its peak top).

A carbon structure exhibiting an excessively small Raman 2D/G ratio, that is, a carbon structure in which the number of the layers in a graphene stack is excessively large, reduces its durability (in particular, corrosion resistance) because the relative amount of its edge or defect, which serves as a starting point of oxidative degradation, with respect to its basal plane is excessively large. In contrast, a carbon structure exhibiting a Raman 2D/G ratio equal to or more than the above-mentioned lower limit values contributes to an improvement in durability (in particular, corrosion resistance) because the structure includes few layers of graphene in which the number of the layers of a graphene stack is controlled within an appropriate range (e.g., from about 2 to about 3), and hence the relative amount of its edge or defect with respect to its exposed basal plane is controlled within an appropriate range.

On the other hand, the edge and the defect function as sites for supporting catalyst metal particles. Accordingly, a carbon structure exhibiting an excessively large Raman 2D/G ratio has poor aptitude for supporting catalyst metal particles because the relative amount of its edge or defect with respect to its basal plane is excessively small. In contrast, a carbon structure exhibiting a moderately large Raman 2D/G ratio has excellent aptitude for supporting catalyst metal particles because the structure contains an appropriate amount of an edge or a defect.

In addition, the hydrophilicity of a carbon structure reduces as the relative amount of its edge or defect with respect to its basal plane reduces. Accordingly, for example, when the metal-supported catalyst is applied to a fuel cell, a carbon structure exhibiting an excessively large Raman 2D/G ratio has poor aptitude for holding produced water. In contrast, a carbon structure exhibiting a moderately large Raman 2D/G ratio has excellent aptitude for holding the produced water because the structure has moderate hydrophilicity.

Accordingly, a carbon structure exhibiting a Raman 2D/G ratio equal to or less than the above-mentioned upper limit values contributes to an improvement in durability and/or catalytic activity of the metal-supported catalyst including the catalyst metal particles supported on the carrier of the present invention (e.g., power generation performance (including power generation performance under a low-humidified condition) in the case where the metal-supported catalyst is applied to a battery) .

The oxygen content of the carrier of the present invention is not particularly limited as long as the effects of the present invention are obtained. However, for example, the oxygen content is preferably 1.0 wt% or more, more preferably 1.5 wt% or more, still more preferably 2.0 wt% or more, still more preferably 2.4 wt% or more, still more preferably 2.6 wt% or more, and still more preferably 2.8 wt% or more. In addition, the oxygen content of the carrier of the present invention is still more preferably 3.0 wt% or more, still more preferably 3.1 wt% or more, still more preferably 3.2 wt% or more, still more preferably 3.3 wt% or more, still more preferably 3.4 wt% or more, still more preferably 3.5 wt% or more, still more preferably 3.6 wt% or more, still more preferably 3.7 wt% or more, still more preferably 3.8 wt% or more, still more preferably 3.9 wt% or more, and particularly preferably 4.0 wt% or more.

In addition, for example, the oxygen content of the carrier of the present invention may be 20.0 wt% or less, may be 15.0 wt% or less, may be 12.0 wt% or less, may be 10.0 wt% or less, may be 9.5 wt% or less, may be 9.0 wt% or less, may be 8.5 wt% or less, may be 8.0 wt% or less, may be 7.5 wt% or less, may be 7.0 wt% or less, may be 6.5 wt% or less, may be 6.0 wt% or less, may be 5.5 wt% or less, may be 5.0 wt% or less, may be 4.8 wt% or less, may be 4.6 wt% or less, may be 4.4 wt% or less, may be 4.2 wt% or less, may be 4.0 wt% or less, may be 3.8 wt% or less, or may be 3.6 wt% or less. In addition, for example, the oxygen content of the carrier of the present invention may be 3.5 wt% or less, may be 3.4 wt% or less, may be 3.3 wt% or less, may be 3.2 wt% or less, or may be 3.1 wt% or less. The oxygen content of the carrier of the present invention may be specified by freely combining any one of the above-mentioned lower limit values and any one of the above-mentioned upper limit values. The oxygen content of the carrier of the present invention is obtained by elemental analysis (e.g., a pyrolysis method).

Herein, an oxygen content obtained by the elemental analysis of a carbon material affects the hydrophilicity of the carbon material. That is, as the oxygen content of the carbon material increases, the hydrophilicity of the carbon material is improved. In this respect, in general, as the Raman G half width at half maximum, Raman D half width at half maximum, and Raman 2D half width at half maximum of the carbon structure become smaller, or as the Raman 2D/G ratio of the carbon structure becomes larger, the hydrophilicity of the carbon structure reduces. However, even in the case of a carbon structure exhibiting a small Raman G half width at half maximum, Raman D half width at half maximum, or Raman 2D half width at half maximum, and/or a carbon structure exhibiting a large Raman 2D/G ratio, its hydrophilicity is improved as its oxygen content increases. In addition, for example, when the metal-supported catalyst is applied to a fuel cell, a carbon material having high hydrophilicity has excellent aptitude for holding produced water.

Accordingly, a carbon structure exhibiting an oxygen content equal to or more than the above-mentioned lower limit values contributes to an improvement in catalytic activity of the metal-supported catalyst including the catalyst metal particles supported on the carrier of the present invention (e.g., power generation performance (including power generation performance under a low-humidified condition) in the case where the metal-supported catalyst is applied to a battery).

On the other hand, a carbon structure exhibiting an excessively large oxygen content has reduced durability (in particular, corrosion resistance) because the number of its oxidation starting points is excessively large. In contrast, a carbon structure exhibiting an oxygen content equal to or less than the above-mentioned upper limit values contributes to an improvement in durability (in particular, corrosion resistance) because the number of its oxidation starting points is not excessively large.

The BET specific surface area of the carrier of the present invention is not particularly limited as long as the effects of the present invention are obtained. However, for example, the BET specific surface area is preferably 300 m²/g or more. The BET specific surface area of the carrier of the present invention is more preferably 400 m²/g or more, still more preferably 500 m²/g or more, still more preferably 600 m²/g or more, still more preferably 700 m²/g or more, still more preferably 800 m²/g or more, and still more preferably 900 m²/g or more. In addition, the BET specific surface area of the carrier of the present invention is still more preferably 1,000 m²/g or more, still more preferably 1,100 m²/g or more, still more preferably 1,150 m²/g or more, still more preferably 1,200 m²/g or more, still more preferably 1,250 m²/g or more, still more preferably 1,300 m²/g or more, still more preferably 1,350 m²/g or more, and particularly preferably 1,400 m²/g or more.

In addition, for example, the BET specific surface area of the carrier of the present invention may be 3,300 m²/g or less, may be 3,000 m²/g or less, may be 2,500 m²/g or less, may be 2,000 m²/g or less, may be 1,800 m²/g or less, or may be 1,600 m²/g or less. In addition, for example, the BET specific surface area of the carrier of the present invention may be 1,500 m²/g or less, may be 1,450 m²/g or less, may be 1,400 m²/g or less, may be 1,350 m²/g or less, may be 1,300 m²/g or less, may be 1,250 m²/g or less, may be 1,200 m²/g or less, may be 1,150 m²/g or less, may be 1,100 m²/g or less, may be 1,000 m²/g or less, may be 950 m²/g or less, or may be 900 m²/g or less. The BET specific surface area of the carrier of the present invention may be specified by freely combining any one of the above-mentioned lower limit values and any one of the above-mentioned upper limit values. The BET specific surface area of the carrier of the present invention is obtained from its nitrogen adsorption isotherm, which is obtained by a nitrogen adsorption method at a temperature of 77 K, by a BET method.

An increase in BET specific surface area in a carbon carrier contributes to an improvement in durability and/or catalytic activity of a metal-supported catalyst including catalyst metal particles supported on the carbon carrier because the increase of the BET surface area increases the number of sites for supporting the catalyst metal particles.

In the carrier of the present invention, the volume of pores each having a pore diameter of 5 nm or more and 70 nm or less (hereinafter referred to as "pore volume (5-70 nm)") is preferably 0.50 cm³/g or less. In this case, the pore volume (5-70 nm) of the carrier of the present invention is more preferably 0.45 cm³/g or less, still more preferably 0.40 cm³/g or less, still more preferably 0.35 cm³/g or less, still more preferably 0.30 cm³/g or less, still more preferably 0.25 cm³/g or less, still more preferably 0.20 cm³/g or less, still more preferably 0.15 cm³/g or less, still more preferably 0.12 cm³/g or less, still more preferably 0.10 cm³/g or less, still more preferably 0.09 cm³/g or less, and still more preferably 0.08 cm³/g or less. In addition, the pore volume (5-70 nm) of the carrier of the present invention is still more preferably 0.07 cm³/g or less, still more preferably 0.06 cm³/g or less, and particularly preferably 0.05 cm³/g or less.

In addition, for example, the pore volume (5-70 nm) of the carrier of the present invention may be 0.00 cm³/g or more, may be 0.01 cm³/g or more, may be 0.02 cm³/g or more, or may be 0.03 cm³/g or more. In addition, the pore volume (5-70 nm) of the carrier of the present invention may be 0.04 cm³/g or more, may be 0.05 cm³/g or more, may be 0.06 cm³/g or more, may be 0.07 cm³/g or more, or may be 0.08 cm³/g or more. The pore volume (5-70 nm) of the carrier of the present invention may be specified by freely combining any one of the above-mentioned lower limit values and any one of the above-mentioned upper limit values. The pore volume (5-70 nm) of the carrier of the present invention is obtained from its nitrogen adsorption isotherm, which is obtained by a nitrogen adsorption method at a temperature of 77 K, by a DFT method.

For example, when a metal-supported catalyst including catalyst metal particles supported on a carbon carrier is applied to a fuel cell, pores in the carbon carrier each having a pore diameter of 5 nm or more and 70 nm or less, which is relatively large, each have poor aptitude for holding produced water. Accordingly, in each of the pores, a proton path is hardly formed by the produced water. In addition, the catalyst metal particles supported in the pores each having a pore diameter of 5 nm or more and 70 nm or less are liable to be covered with an electrolyte, and hence their catalytic activity is liable to reduce. Accordingly, a porous carbon structure having a pore volume (5-70 nm) equal to or less than the above-mentioned upper limit values contributes to an improvement in catalytic activity of the metal-supported catalyst including the catalyst metal particles supported on the carrier of the present invention (e.g., power generation performance (in particular, power generation performance under a low-humidified condition) in the case where the metal-supported catalyst is applied to a battery).

In the carrier of the present invention, the volume of pores each having a pore diameter of less than 5 nm (hereinafter referred to as "pore volume (less than 5 nm)") is preferably 0.20 cm³/g or more. In this case, the pore volume (less than 5 nm) of the carrier of the present invention is more preferably 0.30 cm³/g or more, still more preferably 0.35 cm³/g or more, and still more preferably 0.40 cm³/g or more. In addition, the pore volume (less than 5 nm) of the carrier of the present invention is still more preferably 0.45 cm³/g or more, still more preferably 0.50 cm³/g or more, still more preferably 0.55 cm³/g or more, still more preferably 0.60 cm³/g or more, and particularly preferably 0.65 cm³/g or more.

In addition, for example, the pore volume (less than 5 nm) of the carrier of the present invention may be 1.20 cm³/g or less, may be 1.10 cm³/g or less, may be 1.00 cm³/g or less, may be 0.95 cm³/g or less, may be 0.90 cm³/g or less, may be 0.85 cm³/g or less, may be 0.80 cm³/g or less, or may be 0.75 cm³/g or less. In addition, the pore volume (less than 5 nm) of the carrier of the present invention may be 0.70 cm³/g or less, may be 0.65 cm³/g or less, may be 0.60 cm³/g or less, may be 0.55 cm³/g or less, or may be 0.50 cm³/g or less. The pore volume (less than 5 nm) of the carrier of the present invention may be specified by freely combining any one of the above-mentioned lower limit values and any one of the above-mentioned upper limit values. The pore volume (less than 5 nm) of the carrier of the present invention is obtained from its nitrogen adsorption isotherm, which is obtained by a nitrogen adsorption method at a temperature of 77 K, by a DFT method.

Pores each having a pore diameter of less than 5 nm, which is relatively small, have excellent aptitude for supporting catalyst metal particles with a relatively small particle diameter and high catalytic activity. In addition, for example, since the pores in the carbon carrier each having a pore diameter of less than 5 nm have excellent aptitude for holding produced water, when a metal-supported catalyst including catalyst metal particles supported on such carbon carrier is applied to a fuel cell, a proton path is easily formed by the produced water in the pores. In addition, the catalyst metal particles supported in the pores each having a pore diameter of less than 5 nm are hardly covered with an electrolyte. Accordingly, a porous carbon structure having a pore volume (less than 5 nm) equal to or more than the above-mentioned lower limit values contributes to an improvement in catalytic activity of the metal-supported catalyst including the catalyst metal particles supported on the carrier of the present invention (e.g., power generation performance (in particular, power generation performance under a low-humidified condition) in the case where the metal-supported catalyst is applied to a battery).

On the other hand, a carbon carrier having an excessively large pore volume (less than 5 nm) has reduced corrosion resistance because its carbon structure becomes sparse. In contrast, a carbon structure having a pore volume (less than 5 nm) equal to or less than the above-mentioned upper limit values contributes to an improvement in corrosion resistance of the carrier of the present invention because the structure is dense.

In the carrier of the present invention, the ratio of the above-mentioned pore volume (less than 5 nm) (cm³/g) to the above-mentioned pore volume (5-70 nm) (cm³/g) (hereinafter referred to as "pore volume ratio (5/(5-70))") (-) is preferably 4.0 or more. In this case, the pore volume ratio (5/(5-70)) of the carrier of the present invention is more preferably 4.5 or more, still more preferably 5.0 or more, and still more preferably 6.0 or more. In addition, the pore volume ratio (5/(5-70)) of the carrier of the present invention is still more preferably 6.5 or more, still more preferably 7.0 or more, still more preferably 7.5 or more, still more preferably 8.0 or more, still more preferably 8.5 or more, still more preferably 9.0 or more, still more preferably 9.5 or more, still more preferably 10.0 or more, still more preferably 10.5 or more, still more preferably 11.0 or more, still more preferably 11.5 or more, and particularly preferably 12.0 or more.

In addition, for example, the pore volume ratio (5/(5-70)) of the carrier of the present invention may be 50.0 or less, may be 40.0 or less, may be 35.0 or less, or may be 30.0 or less. In addition, the pore volume ratio (5/(5-70)) of the carrier of the present invention may be 25.0 or less, may be 20.0 or less, may be 15.0 or less, may be 10.0 or less, may be 9.0 or less, or may be 8.0 or less. The pore volume ratio (5/(5-70)) of the carrier of the present invention may be specified by freely combining any one of the above-mentioned lower limit values and any one of the above-mentioned upper limit values.

In a carbon carrier having an excessively small pore volume ratio (5/(5-70)), that is, a carbon carrier having an excessively large pore volume (5-70 nm) compared to its pore volume (less than 5 nm), for example, when a metal-supported catalyst including catalyst metal particles supported on the carbon carrier is applied to a fuel cell, a proton path is hardly formed in its pores, and the catalyst metal particles supported in the pores are liable to be covered with an electrolyte. In contrast, in a carbon carrier having a large pore volume ratio (5/(5-70)), a proton path is easily formed in its pores, and the catalyst metal particles supported in the pores are hardly covered with the electrolyte. Accordingly, a porous carbon structure having a pore volume ratio (5/(5-70)) equal to or more than the above-mentioned lower limit values contributes to an improvement in catalytic activity of the metal-supported catalyst including the catalyst metal particles supported on the carrier of the present invention (e.g., power generation performance (in particular, power generation performance under a low-humidified condition) in the case where the metal-supported catalyst is applied to a battery).

On the other hand, a carbon carrier having an excessively large pore volume ratio (5/(5-70)), that is, a carbon carrier having an excessively large pore volume (less than 5 nm) compared to its pore volume (5-70 nm) has reduced durability because catalyst metal particles are liable to be supported on the outer surface of the carbon carrier rather than in its pores. In contrast, a porous carbon structure having a pore volume ratio (5/(5-70)) equal to or less than the above-mentioned upper limit values contributes to an improvement in durability of the metal-supported catalyst including the catalyst metal particles supported on the carrier of the present invention because the catalyst metal particles are effectively supported in its pores.

The carrier of the present invention preferably has a pore mode diameter of 7.0 nm or less. In this case, the pore mode diameter of the carrier of the present invention is more preferably 6.0 nm or less, still more preferably 5.0 nm or less, still more preferably 4.5 nm or less, still more preferably 4.0 nm or less, still more preferably 3.5 nm or less, and particularly preferably 3.0 nm or less.

In addition, for example, the pore mode diameter of the carrier of the present invention may be 0.5 nm or more, may be 1.0 nm or more, may be 1.5 nm or more, or may be 2.0 nm or more. In addition, the pore mode diameter of the carrier of the present invention may be 2.5 nm or more, or may be 3.0 nm or more. The pore mode diameter of the carrier of the present invention may be specified by freely combining any one of the above-mentioned lower limit values and any one of the above-mentioned upper limit values. The pore mode diameter of the carrier of the present invention is obtained from its nitrogen adsorption isotherm, which is obtained by a nitrogen adsorption method at a temperature of 77 K, by a DFT method.

In a carbon carrier having an excessively large pore mode diameter, for example, when a metal-supported catalyst including catalyst metal particles supported on the carbon carrier is applied to a fuel cell, an electrolyte is liable to penetrate into its pores, and hence the catalyst metal particles supported in the pores are covered with the electrolyte. Thus, the utilization ratio of the catalyst metal particles is liable to reduce. In contrast, in a carbon carrier having a small pore mode diameter, the catalyst metal particles supported in its pores are hardly covered with the electrolyte because the electrolyte hardly penetrates into the pores. Accordingly, a porous carbon structure having a pore mode diameter equal to or less than the above-mentioned upper limit values contributes to an improvement in catalytic activity of the metal-supported catalyst including the catalyst metal particles supported on the carrier of the present invention (e.g., power generation performance in the case where the metal-supported catalyst is applied to a battery).

On the other hand, a carbon carrier having an excessively small pore mode diameter has reduced durability because catalyst metal particles are insufficiently supported in its pores, and hence the catalyst metal particles are liable to be supported on the outer surface of the carbon carrier. In contrast, a porous carbon structure having a pore mode diameter equal to or more than the above-mentioned lower limit values contributes to an improvement in durability of the metal-supported catalyst including the catalyst metal particles supported on the carrier of the present invention because the catalyst metal particles are effectively supported in its pores.

The carrier of the present invention preferably includes a carbon structure exhibiting, in its nitrogen adsorption isotherm obtained by a nitrogen adsorption method at a temperature of 77 K, a difference (hereinafter referred to as "hysteresis (0.5P/P₀)") of 40 cm³/g or less, where the difference is obtained by subtracting a nitrogen adsorption amount from a nitrogen desorption amount at a relative pressure (P/P₀), which is the ratio of an adsorption equilibrium pressure (P) to a saturated vapor pressure (P₀), of 0.5 (-).

In this case, the hysteresis (0.5P/P₀) of the carrier of the present invention is more preferably 45 cm³/g or less, still more preferably 40 cm³/g or less, still more preferably 35 cm³/g or less, still more preferably 30 cm³/g or less, still more preferably 25 cm³/g or less, still more preferably 20 cm³/g or less, still more preferably 18 cm³/g or less, and particularly preferably 15 cm³/g or less.

In addition, for example, the hysteresis (0.5P/P₀) of the carrier of the present invention may be 0 cm³/g or more, or may be 1 cm³/g or more. In addition, the hysteresis (0.5P/P₀) of the carrier of the present invention may be 5 cm³/g or more, may be 10 cm³/g or more, may be 15 cm³/g or more, may be 20 cm³/g or more, or may be 25 cm³/g or more. The hysteresis (0.5P/P₀) of the carrier of the present invention may be specified by freely combining any one of the above-mentioned lower limit values and any one of the above-mentioned upper limit values.

The carrier of the present invention preferably includes a carbon structure exhibiting, in its nitrogen adsorption isotherm obtained by a nitrogen adsorption method at a temperature of 77 K, a difference (hereinafter referred to as "hysteresis (0.8P/P₀)") of 20 cm³/g or less, where the difference is obtained by subtracting a nitrogen adsorption amount from a nitrogen desorption amount at a relative pressure (P/P₀) of 0.8 (-).

In this case, for example, the hysteresis (0.8P/P₀) of the carrier of the present invention is more preferably 15 cm³/g or less, still more preferably 10 cm³/g or less. In addition, the hysteresis (0.8P/P₀) of the carrier of the present invention is still more preferably 9 cm³/g or less, still more preferably 8 cm³/g or less, still more preferably 7 cm³/g or less, still more preferably 6 cm³/g or less, still more preferably 5 cm³/g or less, still more preferably 4 cm³/g or less, and particularly preferably 3 cm³/g or less.

In addition, for example, the hysteresis (0.8P/P₀) of the carrier of the present invention may be 0 cm³/g or more, may be 1 cm³/g or more, may be 2 cm³/g or more, or may be 3 cm³/g or more. In addition, the hysteresis (0.8P/P₀) of the carrier of the present invention may be 4 cm³/g or more, or may be 5 cm³/g or more. The hysteresis (0.8P/P₀) of the carrier of the present invention may be specified by freely combining any one of the above-mentioned lower limit values and any one of the above-mentioned upper limit values.

Herein, as interconnectivity between pores in a carbon carrier becomes higher, a hysteresis shown by the nitrogen adsorption isotherm of the carbon carrier is reduced, and hence the hysteresis (0.5P/P₀) and hysteresis (0.8P/P₀) of the carbon carrier become smaller. Accordingly, a porous carbon structure exhibiting a hysteresis (0.5P/P₀) equal to or less than the above-mentioned upper limit values, and/or a hysteresis (0.8P/P₀) equal to or less than the above-mentioned upper limit values (i.e., a porous carbon structure having high interconnectivity) contributes to an improvement in durability and/or catalytic activity of the metal-supported catalyst, for example, when the metal-supported catalyst including the catalyst metal particles supported on the carrier of the present invention is applied to a fuel cell, because water produced in the pores is effectively discharged. The hysteresis (0.5P/P₀) represents interconnectivity between pores each having a relatively small pore diameter, and the hysteresis (0.8P/P₀) represents interconnectivity between pores each having a relatively large pore diameter.

The carrier of the present invention is preferably specified as a carbon material having any combination of two or more of the above-mentioned characteristics. That is, for example, the carrier according to one aspect of the embodiment of the present invention preferably includes a carbon structure exhibiting one or more selected from the group consisting of the following characteristics (i) to (iii) in its Raman spectrum obtained by Raman spectroscopy in addition to a BET specific surface area in a specific range and a true density in a specific range: (i) a Raman G half width at half maximum in a specific range; (ii) a Raman D half width at half maximum in a specific range; and (iii) a Raman 2D half width at half maximum in a specific range.

In this case, the carrier of the present invention may include a carbon structure exhibiting only one selected from the group consisting of the characteristics (i) to (iii), may include a carbon structure exhibiting a combination of any two selected from the group (the characteristics (i) and (ii), the characteristics (i) and (iii), or the characteristics (ii) and (iii)), or may include a carbon structure exhibiting all of the characteristics (i) to (iii).

Specifically, for example, the carrier of the present invention may have a BET specific surface area of 300 m²/g or more and a true density of 2.1 g/cm³ or more, and include a carbon structure exhibiting one or more selected from the group consisting of the following characteristics (i) to (iii) in its Raman spectrum obtained by Raman spectroscopy: (i) a Raman G half width at half maximum of 37 cm⁻¹ or less; (ii) a Raman D half width at half maximum of 38 cm⁻¹ or less; and (iii) a Raman 2D half width at half maximum of 57 cm⁻¹ or less.

When the carrier of the present invention has a relatively large BET specific surface area, a relatively large true density, and a relatively small Raman half width at half maximum (one or more selected from the group consisting of: a Raman G half width at half maximum; a Raman D half width at half maximum; and a Raman 2D half width at half maximum), the carrier of the present invention effectively contributes to the achievement of both the durability and catalytic activity of the metal-supported catalyst because the carrier of the present invention includes a carbon structure satisfying the following: the structure has such a surface area that the catalyst metal particles are effectively supported; the volume of its closed pores that cannot support the catalyst metal particles is small; and the structure has high crystallinity.

In addition, for example, the carrier according to another aspect of the embodiment of the present invention preferably includes a carbon structure exhibiting one or more selected from the group consisting of the following characteristics (iv) and (v) in its Raman spectrum obtained by Raman spectroscopy in addition to a BET specific surface area in a specific range and a true density in a specific range: (iv) a Raman D/G ratio in a specific range; and (v) a Raman 2D/G ratio in a specific range.

In this case, the carrier of the present invention may include a carbon structure exhibiting only one selected from the group consisting of the characteristics (iv) and (v), or may include a carbon structure exhibiting the characteristics (iv) and (v).

Specifically, for example, the carrier of the present invention may have a BET specific surface area of 300 m²/g or more and a true density of 2.1 g/cm³ or more, and include a carbon structure exhibiting one or more selected from the group consisting of the following characteristics (iv) and (v) in its Raman spectrum obtained by Raman spectroscopy: (iv) a Raman D/G ratio of 1.6 or more; and (v) a Raman 2D/G ratio of 0.3 or more.

When the carrier of the present invention has a relatively large BET specific surface area, a relatively large true density, and a relatively large Raman D/G ratio and/or 2D/G ratio, the carrier of the present invention effectively contributes to the achievement of both the durability and catalytic activity of the metal-supported catalyst because the carrier of the present invention includes a carbon structure satisfying the following: the structure has such a surface area that the catalyst metal particles are effectively supported; the volume of its closed pores that cannot support the catalyst metal particles is small; and the structure is advantageous for supporting the catalyst metal particles.

In addition, for example, the carrier according to still another aspect of the embodiment of the present invention preferably includes a carbon structure exhibiting one or more selected from the group consisting of the following characteristics (i) to (iii), and one or more selected from the group consisting of the following characteristics (iv) and (v) in its Raman spectrum obtained by Raman spectroscopy, in addition to a BET specific surface area in a specific range and a true density in a specific range: (i) a Raman G half width at half maximum in a specific range; (ii) a Raman D half width at half maximum in a specific range; (iii) a Raman 2D half width at half maximum in a specific range; (iv) a Raman D/G ratio in a specific range; and (v) a Raman 2D/G ratio in a specific range.

In this case, the carrier of the present invention may include a carbon structure exhibiting only one selected from the group consisting of the characteristics (i) to (iii), and one or both of the characteristics (iv) and (v). In addition, the carrier of the present invention may include a carbon structure exhibiting a combination of any two selected from the group consisting of the characteristics (i) to (iii) (the characteristics (i) and (ii), the characteristics (i) and (iii), or the characteristics (ii) and (iii)), and one or both of the characteristics (iv) and (v). In addition, the carrier of the present invention may include a carbon structure exhibiting all of the characteristics (i) to (iii), and one or both of the characteristics (iv) and (v).

Specifically, for example, the carrier of the present invention may have a BET specific surface area of 300 m²/g or more and a true density of 2.1 g/cm³ or more, and include a carbon structure exhibiting one or more selected from the group consisting of the following characteristics (i) to (iii), and one or more selected from the group consisting of the following characteristics (iv) and (v) in its Raman spectrum obtained by Raman spectroscopy: (i) a Raman G half width at half maximum of 37 cm⁻¹ or less; (ii) a Raman D half width at half maximum of 38 cm⁻¹ or less; (iii) a Raman 2D half width at half maximum of 57 cm⁻¹ or less; (iv) a Raman D/G ratio of 1.6 or more; and (v) a Raman 2D/G ratio of 0.3 or more.

In addition, for example, the carrier according to still another aspect of the embodiment of the present invention preferably includes a carbon structure exhibiting one or more selected from the group consisting of the following characteristics (i) to (v) in its Raman spectrum obtained by Raman spectroscopy, in addition to an oxygen content in a specific range: (i) a Raman G half width at half maximum in a specific range; (ii) a Raman D half width at half maximum in a specific range; (iii) a Raman 2D half width at half maximum in a specific range; (iv) a Raman D/G ratio in a specific range; and (v) a Raman 2D/G ratio in a specific range.

In this case, the carrier of the present invention may include a carbon structure exhibiting only one selected from the group consisting of the characteristics (i) to (v), may include a carbon structure exhibiting a combination of any two selected from the group consisting of the characteristics (i) to (v), may include a carbon structure exhibiting a combination of any three selected from the group consisting of the characteristics (i) to (v), may include a carbon structure exhibiting a combination of any four selected from the group consisting of the characteristics (i) to (v), or may include a carbon structure exhibiting all of the characteristics (i) to (v).

Specifically, for example, the carrier of the present invention may have an oxygen content of 2.6 wt% or more, and include a carbon structure exhibiting one or more selected from the group consisting of the above-mentioned characteristics (i) to (v) in its Raman spectrum obtained by Raman spectroscopy: (i) a Raman G half width at half maximum of 37 cm⁻¹ or less; (ii) a Raman D half width at half maximum of 38 cm⁻¹ or less; (iii) a Raman 2D half width at half maximum of 57 cm⁻¹ or less; (iv) a Raman D/G ratio of 1.6 or more; and (v) a Raman 2D/G ratio of 0.3 or more.

In addition, the carrier of the present invention may include a carbon structure exhibiting one or more selected from the group consisting of the above-mentioned characteristics (i) to (iii) in its Raman spectrum obtained by Raman spectroscopy in addition to an oxygen content in a specific range: (i) a Raman G half width at half maximum in a specific range; (ii) a Raman D half width at half maximum in a specific range; and (iii) a Raman 2D half width at half maximum in a specific range.

Specifically, for example, the carrier of the present invention may have an oxygen content of 1.0 wt% or more, and include a carbon structure exhibiting a Raman 2D half width at half maximum of 57 cm⁻¹ or less as the above-mentioned characteristic (iii).

In addition, the carrier of the present invention may include a carbon structure exhibiting one or more selected from the group consisting of the above-mentioned characteristics (iv) and (v) in its Raman spectrum obtained by Raman spectroscopy in addition to an oxygen content in a specific range: (iv) a Raman D/G ratio in a specific range; and (v) a Raman 2D/G ratio in a specific range.

In addition, the carrier of the present invention may include a carbon structure exhibiting one or more selected from the group consisting of the following characteristics (i) to (iii) in its Raman spectrum obtained by Raman spectroscopy, and one or more selected from the group consisting of the following characteristics (iv) and (v) in the Raman spectrum obtained by the Raman spectroscopy in addition to an oxygen content in a specific range: (i) a Raman G half width at half maximum in a specific range; (ii) a Raman D half width at half maximum in a specific range; (iii) a Raman 2D half width at half maximum in a specific range; (iv) a Raman D/G ratio in a specific range; and (v) a Raman 2D/G ratio in a specific range.

In addition, the carrier of the present invention preferably has, for example, a BET specific surface area in a specific range, a true density in a specific range, and an oxygen content in a specific range.

In addition, for example, the carrier of the present invention may have, as a characteristic concerning its pore volume, one or more selected from the group consisting of: a pore volume (5-70 nm) in a specific range; a pore volume (less than 5 nm) in a specific range; and a pore volume ratio (5/(5-70)) in a specific range.

That is, in this case, the carrier of the present invention may have only one of the following three pore volume characteristics: the pore volume (5-70 nm) in the specific range; the pore volume (less than 5 nm) in the specific range; and the pore volume ratio (5/(5-70)) in the specific range. Alternatively, the carrier of the present invention may have a combination of any two of the above-mentioned three pore volume characteristics, namely the pore volume (5-70 nm) in the specific range and the pore volume (less than 5 nm) in the specific range, the pore volume (5-70 nm) in the specific range and the pore volume ratio (5/(5-70)) in the specific range, or the pore volume (less than 5 nm) in the specific range and the pore volume ratio (5/(5-70)) in the specific range. Alternatively, the carrier of the present invention may have all (three) of the pore volume characteristics.

The carrier of the present invention is preferably a carbonized material. The carbonized material is obtained by carbonizing a raw material containing an organic substance. For example, the content of the organic substance in the raw material for carbonization may be 5 wt% or more and 90 wt% or less, and is preferably 10 wt% or more and 80 wt% or less.

The organic substance in the raw material is not particularly limited as long as the organic substance is carbonized. An organic compound in the organic substance may be a polymer (e.g., a thermosetting resin and/or a thermoplastic resin), and/or may be an organic compound having a smaller molecular weight.

Specifically, the organic substance may be, for example, one or more selected from the group consisting of: polyacrylonitrile; a polyacrylonitrile-polyacrylic acid copolymer; a polyacrylonitrile-polymethyl acrylate copolymer; a polyacrylonitrile-polymethacrylic acid copolymer; a polyacrylonitrile-polymethacrylic acid-polymethallylsulfonic acid copolymer; a polyacrylonitrile-polymethyl methacrylate copolymer; a phenol resin; polyfurfuryl alcohol; furan; a furan resin; a phenol formaldehyde resin; melamine; a melamine resin; an epoxy resin; a nitrogen-containing chelate resin (e.g., one or more kinds selected from the group consisting of: a polyamine-type chelate resin; an iminodiacetic acid-type chelate resin; an aminophosphoric acid-type chelate resin; and an aminomethylphosphonic acid-type chelate resin); a polyamideimide resin; pyrrole; polypyrrole; polyvinylpyrrole; 3-methyl polypyrrole; acrylonitrile; polyvinylidene chloride; thiophene; oxazole; thiazole; pyrazole; vinylpyridine; polyvinylpyridine; pyridazine; pyrimidine; piperazine; pyran; morpholine; imidazole; 1-methylimidazole; 2-methylimidazole; quinoxaline; aniline; polyaniline; succinic acid dihydrazide; adipic acid dihydrazide; polysulfone; polyaminobismaleimide; polyimide; polyvinyl alcohol; polyvinyl butyral; benzimidazole; polybenzimidazole; polyamide; polyester; polylactic acid; polyether; polyether ether ketone; cellulose; carboxymethyl cellulose; lignin; chitin; chitosan; pitch; silk; wool; polyamino acid; a nucleic acid; DNA; RNA; hydrazine; hydrazide; urea; salen; polycarbazole; polybismaleimide; triazine; polyacrylic acid; a polyacrylic acid ester; a polymethacrylic acid ester; polymethacrylic acid; polyurethane; polyamidoamine; and polycarbodiimide.

The carrier of the present invention preferably contains nitrogen. That is, the carrier of the present invention preferably contains a nitrogen atom (e.g., a doped nitrogen atom) in its carbon structure. The carrier of the present invention containing nitrogen is preferably a carbonized material containing nitrogen. The carbonized material containing nitrogen is obtained by, for example, carbonizing a raw material containing a nitrogen-containing organic substance. The nitrogen-containing organic substance preferably contains a nitrogen-containing organic compound. The nitrogen-containing organic compound is not particularly limited as long as the organic compound contains a nitrogen atom in its molecule. The nitrogen in the carrier of the present invention may be nitrogen introduced by nitrogen doping treatment.

For example, the nitrogen content of the carrier of the present invention may be 0.10 wt% or more, and is preferably 0.15 wt% or more, more preferably 0.20 wt% or more, still more preferably 0.25 wt% or more, and particularly preferably 0.30 wt% or more. For example, the nitrogen content of the carrier of the present invention may be 10.00 wt% or less. The nitrogen content of a carbon carrier is obtained by subjecting the carbon carrier to elemental analysis (specifically, a combustion method) .

The carrier of the present invention is preferably a carbonized material obtained by carbonizing a raw material containing an organic substance and a metal. In this case, the carrier of the present invention may be a carbonized material subjected to metal removal treatment after the carbonization. The metal removal treatment is treatment for reducing the amount of a raw material-derived metal in the carbonized material. Specifically, the metal removal treatment is preferably, for example, washing treatment with an acid and/or electrolytic treatment.

When the carrier of the present invention is a carbonized material obtained by carbonizing a raw material containing an organic substance and a metal, the carrier of the present invention may contain a metal derived from the raw material for carbonization (hereinafter sometimes referred to as "raw material metal"). In this case, the carrier of the present invention contains the metal inside a skeleton which forms a porous structure. Even when the carrier of the present invention is a carbonized material produced through metal removal treatment as described above, the raw material metal remains inside the skeleton of the carrier of the present invention. In this case, the weight of a metal inside the skeleton of the carrier of the present invention may be larger than the weight of a metal in the surface of the skeleton of the carrier of the present invention.

The metal inside the skeleton of the carrier of the present invention may be detected by, for example, subjecting the skeleton to surface etching treatment and analyzing a cross-section exposed by the etching treatment. That is, in this case, when one particle of the carrier of the present invention is subjected to etching treatment, the metal is detected in a cross-section of the particle exposed by the etching treatment. The metal in the carrier of the present invention may be detected by, for example, inductively coupled plasma atomic emission spectroscopy of the carrier of the present invention.

For example, the metal content of the carrier of the present invention (ratio of the weight of the metal in the carrier of the present invention to the weight of the carrier of the present invention on which the catalyst metal particles have not been supported yet) may be 0.000 wt% or more, may be 0.001 wt% or more, may be 0.002 wt% or more, or may be 0.003 wt% or more. In addition, for example, the metal content of the carrier of the present invention may be 1 wt% or less, may be 0.5 wt% or less, may be 0.1 wt% or less, may be 0.05 wt% or less, may be 0.01 wt% or less, may be 0.008 wt% or less, or may be 0.005 wt% or less. The metal content of the carrier of the present invention may be specified by freely combining any one of the above-mentioned lower limit values and any one of the above-mentioned upper limit values. The metal content of the carrier of the present invention is obtained by, for example, inductively coupled plasma atomic emission spectroscopy of the carrier of the present invention.

The raw material metal is preferably a transition metal. That is, the raw material metal is preferably a transition metal belonging to Groups III to XII in the periodic table of elements, and particularly preferably a transition metal belonging to the fourth period of Groups III to XII in the periodic table of elements.

The raw material metal may be a transition metal except platinum. In addition, the raw material metal may be a transition metal except noble metals (e.g., ruthenium (Ru), palladium (Pd), rhodium (Rh), silver (Ag), osmium (Os), iridium (Ir), platinum (Pt), and gold (Au)).

Specifically, the raw material metal may be, for example, one or more selected from the group consisting of: scandium (Sc); titanium (Ti); vanadium (V); chromium (Cr); manganese (Mn); iron (Fe); cobalt (Co); nickel (Ni); copper (Cu); zinc (Zn); yttrium (Y); zirconium (Zr); niobium (Nb); molybdenum (Mo); ruthenium (Ru); rhodium (Rh); palladium (Pd); silver (Ag); lanthanoids (e.g., gadolinium (Gd)); and actinoids, and is preferably one or more selected from the group consisting of: Fe; Co; Ni; Cu; and Zn, more preferably one or more selected from the group consisting of: Fe; Co; Ni; and Zn, and particularly preferably one or more selected from the group consisting of: Co; Ni; and Zn.

The carrier of the present invention may be free of platinum (Pt). In addition, the carrier of the present invention may be free of any noble metal. That is, the carrier of the present invention may be free of, for example, ruthenium (Ru), palladium (Pd), rhodium (Rh), silver (Ag), osmium (Os), iridium (Ir), platinum (Pt), and gold (Au).

The carbonization in the production of the carbonized material is performed by heating the raw material at a temperature at which the organic substance in the raw material is carbonized. A carbonizing temperature is not particularly limited as long as the raw material is carbonized at the temperature. The carbonizing temperature is, for example, preferably 1,200°C or more, more preferably 1,300°C or more, still more preferably 1,400°C or more, and particularly preferably 1,500°C or more.

In addition, for example, the carbonizing temperature may be 3,000°C or less, and is preferably 2,500°C or less. In addition, the carbonizing temperature may be 2,400°C or less, may be 2,300°C or less, may be 2,200°C or less, may be 2,100°C or less, may be 2,000°C or less, may be 1,900°C or less, may be 1,800°C or less, may be 1,700°C or less, or may be 1,600°C or less. The carbonizing temperature may be specified by freely combining any one of the above-mentioned lower limit values and any one of the above-mentioned upper limit values. A temperature increase rate up to the carbonizing temperature is not particularly limited, and may be, for example, 0.5°C/min or more and 300°C/min or less. The carbonization is preferably performed in an inert atmosphere such as a nitrogen atmosphere.

The carbonization may be performed under normal pressure (atmospheric pressure), but is preferably performed under pressure (under a pressure higher than atmospheric pressure). When the carbonization is performed under pressure, the pressure of the atmosphere for carbonization may be, for example, 0.05 MPa or more in terms of gauge pressure, and is preferably 0.15 MPa or more, more preferably 0.20 MPa or more, still more preferably 0.40 MPa or more, and particularly preferably 0.50 MPa or more in terms of gauge pressure. The upper limit value of the pressure of the atmosphere for carbonization is not particularly limited, but the pressure may be, for example, 10 MPa or less in terms of gauge pressure.

The carrier of the present invention is preferably a carbonized material subjected to graphitization treatment after carbonization. That is, the carrier of the present invention is preferably, for example, a carbonized material obtained by further subjecting the carbonized material obtained by carbonizing the raw material containing the organic substance to graphitization treatment.

The graphitization treatment is performed by heating the carbonized material at a temperature at which graphitization proceeds. A heating temperature at which the carbonized material is heated in the graphitization treatment is not particularly limited as long as graphitization proceeds in the carbonized material at the temperature. However, the heating temperature is preferably a temperature higher than the carbonizing temperature for obtaining the carbonized material.

Specifically, the heating temperature in the graphitization treatment may be, for example, 1,300°C or more, and is preferably 1,400°C or more, more preferably 1,500°C or more, still more preferably 1,600°C or more, still more preferably 1,650°C or more, and particularly preferably 1,700°C or more.

Further, for example, the heating temperature in the graphitization treatment may be 1,750°C or more, may be 1,800°C or more, may be 1,850°C or more, may be 1,900°C or more, may be 1,950°C or more, may be 2,000°C or more, may be 2,050°C or more, may be 2,100°C or more, may be 2,150°C or more, or may be 2,200°C or more.

In addition, for example, the heating temperature in the graphitization treatment may be 3,000°C or less, may be 2,500°C or less, may be 2,400°C or less, may be 2,300°C or less, may be 2,250°C or less, or may be 2,200°C or less.

Further, for example, the heating temperature in the graphitization treatment may be 2,150°C or less, may be 2,050°C or less, may be 2,000°C or less, may be 1,950°C or less, may be 1,900°C or less, may be 1,850°C or less, may be 1,800°C or less, may be 1,750°C or less, or may be 1,700°C or less.

The heating temperature in the graphitization treatment may be specified by freely combining any one of the above-mentioned lower limit values and any one of the above-mentioned upper limit values. A temperature increase rate up to the heating temperature in the graphitization treatment is not particularly limited, and may be, for example, 0.5°C/min or more and 300°C/min or less. The graphitization treatment is preferably performed in an inert atmosphere such as a nitrogen atmosphere.

When the carrier of the present invention is a carbonized material subjected to graphitization treatment after carbonization, the carbonized material after the graphitization treatment is preferably free from being subjected to pulverization treatment. That is, in the production of the carrier of the present invention, for example, the following procedure is preferred: the carbonized material obtained by carbonizing the raw material is subjected to pulverization treatment to be adjusted in its particle diameter (e.g., median diameter); the carbonized material having been pulverized is then subjected to graphitization treatment; and the carbonized material after the graphitization treatment is not subjected to pulverization treatment.

The carrier of the present invention is preferably a carbonized material subjected to oxidation treatment after graphitization treatment. That is, the carrier of the present invention is preferably, for example, a carbonized material obtained by subjecting the carbonized material obtained by carbonizing the raw material containing the organic substance to graphitization treatment and then further subjecting the resultant to oxidation treatment.

The oxidation treatment is performed by heating the carbonized material in an oxygen-containing atmosphere at the temperature at which its oxidation proceeds. The atmosphere in which the oxidation treatment is performed is not particularly limited as long as the atmosphere contains oxygen. However, for example, the treatment is preferably performed in air (in the atmosphere). A heating temperature at which the carbonized material is heated in the oxidation treatment is not particularly limited as long as oxidation proceeds in the carbonized material at the temperature. However, the heating temperature is preferably a temperature lower than the carbonizing temperature for obtaining the carbonized material.

Specifically, the heating temperature in the oxidation treatment may be, for example, 300°C or more, and is preferably 320°C or more, more preferably 350°C or more, still more preferably 380°C or more, still more preferably 400°C or more, and particularly preferably 420°C or more.

In addition, the heating temperature in the oxidation treatment may be, for example, 650°C or less, and is preferably 600°C or less, more preferably 550°C or less, still more preferably 500°C or less, and particularly preferably 480°C or less. The heating temperature in the oxidation treatment may be specified by freely combining any one of the above-mentioned lower limit values and any one of the above-mentioned upper limit values.

The carrier of the present invention is preferably a carbon material exhibiting catalytic activity. That is, in this case, the carrier of the present invention is a carbon catalyst that itself exhibits catalytic activity alone. The carrier of the present invention serving as a carbon catalyst is preferably a carbonized material obtained by carbonizing a raw material containing an organic substance and a metal as described above.

The catalytic activity of the carrier of the present invention is, for example, preferably reduction activity and/or oxidation activity, more preferably oxygen reduction activity and/or hydrogen oxidation activity, and particularly preferably at least oxygen reduction activity.

The carrier of the present invention is preferably used as a carbon carrier for supporting catalyst metal particles. In this respect, a metal-supported catalyst according to an embodiment of the present invention (hereinafter referred to as "catalyst of the present invention") includes the carrier of the present invention and catalyst metal particles supported on the carrier of the present invention.

The catalyst of the present invention is produced by supporting the catalyst metal particles on the carrier of the present invention. That is, for example, the carrier of the present invention is impregnated with a precursor of a metal for constructing the catalyst metal particles, and the carrier of the present invention impregnated with the precursor is then subjected to reduction treatment. Consequently, the catalyst metal particles each containing the metal are supported on the carrier of the present invention.

The catalyst metal particles are not particularly limited as long as the metal particles exhibit catalytic activity. However, the catalyst metal particles are, for example, preferably metal particles exhibiting reduction activity and/or oxidation activity, more preferably metal particles exhibiting oxygen reduction activity and/or hydrogen oxidation activity, and particularly preferably metal particles exhibiting at least oxygen reduction activity.

Specifically, the catalyst metal particles are preferably metal particles containing a noble metal (hereinafter referred to as "noble metal particles"). The noble metal particles contain a pure noble metal (noble metal prevented from forming an alloy) and/or a noble metal alloy (an alloy of a noble metal and a metal except the noble metal (hereinafter referred to as "non-noble metal")). The noble metal alloy is an alloy of one or more noble metals and one or more non-noble metals.

The noble metal is, for example, preferably one or more selected from the group consisting of: ruthenium (Ru); palladium (Pd); rhodium (Rh); silver (Ag); osmium (Os); iridium (Ir); platinum (Pt); and gold (Au), more preferably one or more selected from the group consisting of: Ru; Pd; Rh; Ir; and Pt, and particularly preferably Pt. That is, the noble metal particles are particularly preferably platinum particles (metal particles each containing platinum). The platinum particles each contain pure platinum (platinum prevented from forming an alloy) and/or a platinum alloy (alloy of platinum and a non-noble metal).

The non-noble metal for forming the noble metal alloy is not particularly limited as long as the non-noble metal forms an alloy with a noble metal. However, the non-noble metal is preferably a transition metal except a noble metal. Specifically, the non-noble metal in the noble metal alloy is, for example, preferably one or more selected from the group consisting of: titanium (Ti); manganese (Mn); iron (Fe); cobalt (Co); nickel (Ni); copper (Cu); niobium (Nb); and cerium (Ce), more preferably one or more selected from the group consisting of: Fe; Co; and Ni, and particularly preferably one or more selected from the group consisting of: Co; and Ni.

When the carrier of the present invention is a carbonized material of a raw material containing an organic substance and a raw material metal, the catalyst metal particles supported on the carrier of the present invention may contain the same metal as the raw material metal, or may be free of the same metal as the raw material metal.

The catalyst of the present invention preferably has a ratio of the weight of the noble metal in the catalyst of the present invention (more specifically, the noble metal in the catalyst metal particles) to the weight of the catalyst of the present invention (hereinafter referred to as "noble metal content") of 10 wt% or more. The noble metal content of the catalyst of the present invention is, for example, more preferably 20 wt% or more, still more preferably 30 wt% or more, still more preferably 35 wt% or more, still more preferably 40 wt% or more, and particularly preferably 45 wt% or more.

In addition, for example, the noble metal content of the catalyst of the present invention may be 90 wt% or less, may be 80 wt% or less, may be 70 wt% or less, or may be 60 wt% or less. The noble metal content of the catalyst of the present invention may be specified by freely combining any one of the above-mentioned lower limit values and any one of the above-mentioned upper limit values. The noble metal content of the catalyst of the present invention is obtained by inductively coupled plasma (ICP) atomic emission spectroscopy.

An electrode according to an embodiment of the present invention (hereinafter referred to as "electrode of the present invention") includes the catalyst of the present invention. That is, the electrode of the present invention includes a battery electrode including an electrode base material and the catalyst of the present invention supported on the electrode base material. Specifically, the electrode of the present invention includes, for example, an electrode base material and a catalyst layer containing the catalyst of the present invention, the layer being formed on the electrode base material.

The electrode of the present invention is preferably a battery electrode. That is, the electrode of the present invention is preferably, for example, an electrode for a fuel cell (e.g., a polymer electrolyte fuel cell), an air cell, a water electrolyzer (e.g., a polymer electrolyte water electrolyzer), a redox flow battery, or a halogen battery.

The electrode of the present invention may be a cathode or an anode, but is preferably a cathode. That is, the electrode of the present invention is a cathode or an anode of a fuel cell, an air cell, a water electrolyzer, a redox flow battery, or a halogen battery, preferably a cathode.

A battery according to an embodiment of the present invention (hereinafter referred to as "battery of the present invention") includes the electrode of the present invention. Specifically, the battery of the present invention is preferably a fuel cell (e.g., a polymer electrolyte fuel cell), an air cell, a redox flow battery, or a halogen battery including the electrode of the present invention. The battery of the present invention preferably includes a membrane electrode assembly (MEA) including the electrode of the present invention.

The battery of the present invention is a battery including the electrode of the present invention as a cathode or an anode, preferably a battery including the electrode of the present invention as a cathode. That is, the battery of the present invention is a fuel cell, an air cell, a redox flow battery, or a halogen battery including the electrode of the present invention as a cathode or an anode, preferably a fuel cell, an air cell, a redox flow battery, or a halogen battery including the electrode of the present invention as a cathode.

Next, specific Examples according to the embodiments of the present invention will be described.

### Examples

### [Production of Carbon Carriers: Example C1 to Example C4]

Commercially available ketjen black (EC600JD, manufactured by Lion Specialty Chemicals Co., Ltd.) was used as a carbon carrier KB of Example C1. In addition, the carbon carrier KB was subjected to air oxidation treatment by being heated in air at 450°C for 1 hour. A carbon material obtained by the air oxidation treatment was used as a carbon carrier KB-AO of Example C2.

The carbon carrier KB was subjected to graphitization treatment by being heated in a nitrogen atmosphere under normal pressure at 2,000°C. A carbon material obtained by the graphitization treatment was used as a carbon carrier KB-G2000 of Example C3. The carbon carrier KB-G2000 obtained in Example C3 described above was subjected to air oxidation treatment by being heated in air at 450°C for 1 hour. A carbon material obtained by the air oxidation treatment was used as a carbon carrier KB-G2000AO of Example C4.

### [Production of Carbon Carrier: Example C5]

1.0 g of polyacrylonitrile, 1.0 g of 2-methylimidazole, 3.3 g of zinc chloride (ZnCl₂), and 30 g of dimethylformamide were mixed. The solvent was removed from the resultant mixture by drying. The dried mixture was infusibilized by heating at 250°C in the atmosphere.

The mixture after the infusibilization was carbonized by heating at 1,500°C in a nitrogen atmosphere under a gauge pressure (increased pressure) of 0.90 MPa. Dilute hydrochloric acid was added to the carbonized material obtained by the carbonization, and the mixture was stirred. After that, the suspension containing the carbonized material was filtered with a filtration membrane, and the carbonized material was washed with distilled water until the filtrate became neutral. In this manner, metal removal treatment by washing with an acid was performed.

The carbonized material after the metal removal treatment was pulverized with a fine pulverizer until a particle diameter median value thereof reached 0.4 µm or less. The carbonized material after the pulverization was dried in a vacuum so that water was removed. The carbonized material thus obtained was used as a carbon carrier C1500 of Example C5.

### [Production of Carbon Carriers: Example C6 to Example C9]

The carbon carrier C1500 obtained in Example C5 described above was subjected to graphitization treatment by heating at 1,700°C, 1,900°C, 2,000°C, or 2,200°C in a nitrogen atmosphere under normal pressure. Carbonized materials thus obtained by the graphitization treatments at 1,700°C, 1,900°C, 2,000°C, and 2,200°C were used as a carbon carrier C1500-G1700 of Example C6, a carbon carrier C1500-G1900 of Example C7, a carbon carrier C1500-G2000 of Example C8, and a carbon carrier C1500-G2200 of Example C9, respectively.

### [Production of Carbon Carriers: Example 1 to Example 4]

The carbon carrier C1500-G1700, the carbon carrier C1500-G1900, the carbon carrier C1500-G2000, and the carbon carrier C1500-G2200 obtained in Example C6 to Example C9 described above were each subjected to oxidation treatment by heating at 450°C for 1 hour in air. Carbonized materials thus obtained by the oxidation treatment after the graphitization treatments were used as a carbon carrier C1500-G1700AO of Example 1, a carbon carrier C1500-G1900AO of Example 2, a carbon carrier C1500-G2000AO of Example 3, and a carbon carrier C1500-G2200AO of Example 4, respectively.

### [Constant Volume Expansion Method (True Density)]

The true density of a carbon carrier was measured by a constant volume expansion method in conformity with JIS M 8717. Specifically, the volume of a helium gas eliminated by loading the carbon carrier into a sample chamber having a volume of 1.8 cm³ was calculated with an ultrapycnometer (UP-1200e, manufactured by Anton Paar GmbH) by Boyle's law. Such measurement was performed for each carbon carrier three times, and the arithmetic average of the volumes obtained by the three times of measurement was obtained as the volume of the carbon carrier. Then, the true density (g/cm³) of the carbon carrier was calculated by dividing the weight (g) of the carbon carrier measured with an electronic balance by the volume (cm³) of the carbon carrier obtained as described above.

### [Elemental Analysis (Oxygen Content)]

The oxygen content of a carbon carrier was measured by elemental analysis (pyrolysis method). Specifically, in a helium/hydrogen atmosphere (hydrogen: from 5 vol% to 8 vol%), 2 mg of the carbon carrier was pyrolyzed on carbon-coated platinum at 1,000°C, and an oxygen-containing compound (gas) produced by the pyrolysis was analyzed with an organic trace element analyzer (2400II, PerkinElmer, Inc.). Thus, the oxygen content (wt%) of the carbon carrier was obtained.

### [Raman Spectroscopy]

The carbon carrier was analyzed by Raman spectroscopy. A Raman spectrum was measured with a HORIBA microlaser Raman spectroscopic measuring device (LabRAM, HORIBA Jobin Yvon). The laser used for the measurement had an excitation wavelength of 532 nm and an output of 50 mW, and measurement was performed through a neutral density filter D3 under the conditions of exposure of 90 seconds×integration of 2 times. Thus, a Raman spectrum was obtained.

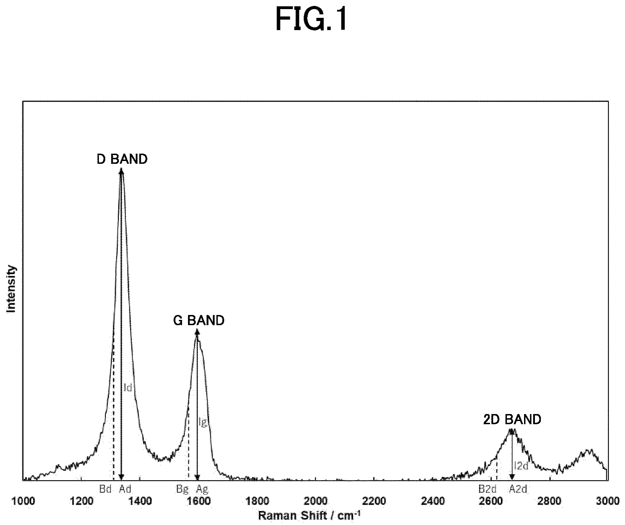

The resultant Raman spectrum was subjected to baseline correction. That is, the baseline correction was performed by determining a straight line connecting a scattering intensity near a Raman shift (cm⁻¹) of 800 cm⁻¹ and a scattering intensity near a Raman shift (cm⁻¹) of 2,000 cm⁻¹ as a baseline, and subtracting the baseline from each intensity of the scattering spectrum. Herein, a Raman spectrum after the baseline correction, which has been obtained for the carbon carrier C1500-G1700AO of Example 1, is shown as an example of the Raman spectrum in FIG. 1.

Then, a G band having a peak top at a Raman shift of around 1,580 cm⁻¹ (specifically, in the range of 1,550 cm⁻¹ or more and 1,610 cm⁻¹ or less) was identified. Then, a Raman shift (cm⁻¹) B_{g} corresponding to an intensity of half of an intensity I_{g} of the G band (intensity of the G band at the peak top) was subtracted from a Raman shift (cm⁻¹) A_{g} corresponding to the intensity I_{g} of the G band. Thus, a Raman G half width at half maximum (cm⁻¹) was calculated. That is, the Raman G half width at half maximum of the carbon carrier was calculated by the following equation: Raman G half width at half maximum (cm⁻¹)=A_{g} (cm⁻¹) -B_{g} (cm⁻¹).

Next, a D band having a peak top at a Raman shift of around 1,340 cm⁻¹ (specifically, in the range of 1,320 cm⁻¹ or more and 1,360 cm⁻¹ or less) was identified. Then, a Raman shift (cm⁻¹) B_{d} corresponding to an intensity of half of an intensity I_{d} of the D band (intensity of the D band at the peak top) was subtracted from a Raman shift (cm⁻¹) A_{d} corresponding to the intensity I_{d} of the D band. Thus, a Raman D half width at half maximum (cm⁻¹) was calculated. That is, the Raman D half width at half maximum of the carbon carrier was calculated by the following equation: Raman D half width at half maximum (cm⁻¹)=A_{d} (cm⁻¹) -B_{d} (cm⁻¹).

Further, a 2D band having a peak top at a Raman shift of around 2,700 cm⁻¹ (specifically, in the range of 2,670 cm⁻¹ or more and 2,730 cm⁻¹ or less) was identified. Then, a Raman shift (cm⁻¹) B_{2d} corresponding to an intensity of half of an intensity I_{2d} of the 2D band (intensity of the 2D band at the peak top) was subtracted from a Raman shift (cm⁻¹) A_{2d} corresponding to the intensity I_{2d} of the 2D band. Thus, a Raman 2D half width at half maximum (cm⁻¹) was calculated. That is, the Raman 2D half width at half maximum of the carbon carrier was calculated by the following equation: Raman 2D half width at half maximum (cm⁻¹)=A_{2d} (cm⁻¹)-B_{2d} (cm⁻¹).

In addition, a Raman D/G ratio was calculated by dividing the intensity I_{d} of the D band by the intensity I_{g} of the G band. That is, the Raman D/G ratio of the carbon carrier was calculated by the following equation: Raman D/G ratio=I_{d}/I_{g}.

In addition, a Raman 2D/G ratio was calculated by dividing the intensity I_{2d} of the 2D band by the intensity I_{g} of the G band. That is, the Raman 2D/G ratio of the carbon carrier was calculated by the following equation: Raman 2D/G ratio=I_{2d}/I_{g}.

### [Nitrogen Adsorption Method]

The specific surface area and pore volume of a carbon carrier, a hysteresis in the nitrogen adsorption isotherm, and the pore mode diameter were measured by a nitrogen adsorption method with a specific surface area/pore distribution-measuring device (TriStar II 3020, manufactured by Shimadzu Corporation) and analysis software (TriStar II 3020) included in the device.

That is, first, 0.1 g of the carbon carrier was held at 100°C and 6.7×10⁻² Pa for 3 hours so that moisture adsorbing to the carbon carrier was removed. Next, the nitrogen adsorption isotherm at 77 K was obtained by a BET method. The nitrogen adsorption isotherm at 77 K was obtained by measuring a change in amount of nitrogen adsorbing to the carbon carrier along with a change in pressure of a nitrogen gas at a temperature of 77 K.

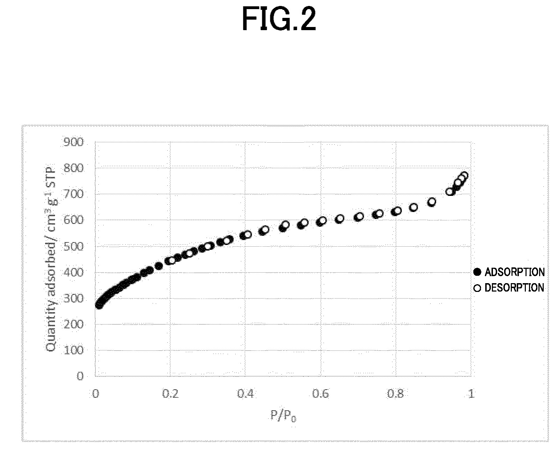

In FIG. 2, a nitrogen adsorption isotherm obtained for the carbon carrier C1500-G1700AO of Example 1 is shown as an example of the nitrogen adsorption isotherm obtained at 77 K by the BET method. In the adsorption isotherm shown in FIG. 2, the axis of abscissa indicates a relative pressure (P/P₀) (-), which is the ratio of an adsorption equilibrium pressure (P) to a saturated vapor pressure (P₀) (1.01×10⁵ Pa for nitrogen at 77 K), and the axis of ordinate indicates a nitrogen adsorption amount (cm³/g). As shown in FIG. 2, an adsorption-side isotherm (adsorption isotherm measured while the relative pressure was increased) (solid circle marks in the figure) and a desorption-side isotherm (adsorption isotherm measured while the relative pressure was reduced) (hollow circle marks in the figure) were obtained.

Then, in the nitrogen adsorption isotherm obtained for each carbon carrier, a nitrogen adsorption amount was subtracted from a nitrogen desorption amount at a relative pressure (P/P₀) of 0.5. Thus, a hysteresis (0.5P/P₀) (cm³/g) that was a difference between the nitrogen desorption amount and the nitrogen adsorption amount was calculated. Similarly, a nitrogen adsorption amount was subtracted from a nitrogen desorption amount at a relative pressure (P/P₀) of 0.8. Thus, a hysteresis (0.8P/P₀) (cm³/g) that was a difference between the nitrogen desorption amount and the nitrogen adsorption amount was calculated.

In addition, the BET specific surface area (m²/g) of a carbon carrier was obtained from the nitrogen adsorption isotherm at a temperature of 77 K. In addition, the volume of the pores of the carbon carrier each having a pore diameter of less than 5 nm (pore volume (less than 5 nm)) (cm³/g) was calculated from the nitrogen adsorption isotherm at a temperature of 77 K through the integration of the volumes (cm³/g) of the respective pores each having a pore diameter of less than 5 nm, by a DFT method. Similarly, the volume of the pores each having a pore diameter of 5 nm or more and 70 nm or less (pore volume (5-70 nm)) (cm³/g) was calculated through the integration of the volumes (cm³/g) of the respective pores each having a pore diameter of 5 nm or more and 70 nm or less.

Further, the ratio (pore volume ratio (5/(5-70))) (-) of the pore volume (less than 5 nm) to the pore volume (5-70 nm) was calculated for each carbon carrier by dividing the pore volume (less than 5 nm) by the pore volume (5-70 nm).

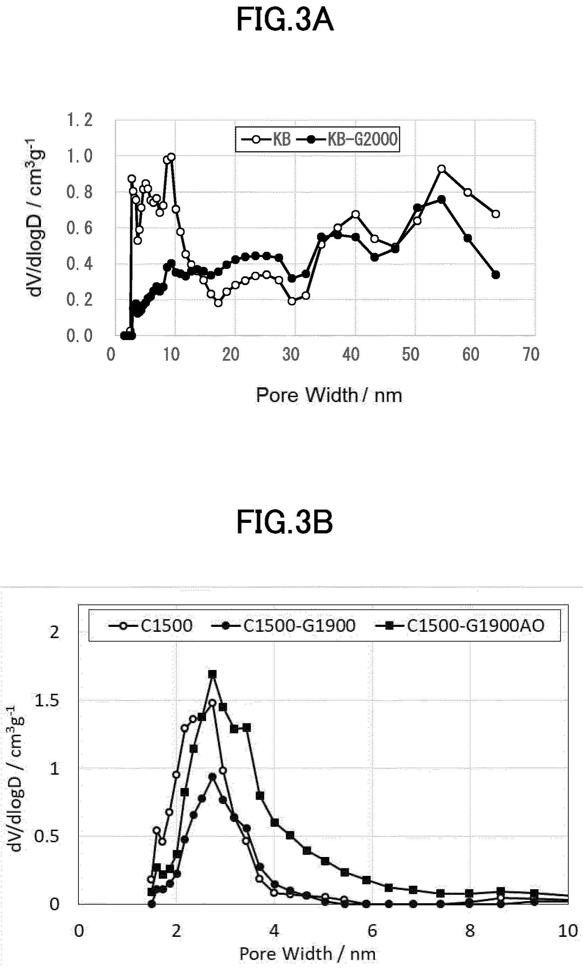

In addition, the pore diameter distribution was obtained from the nitrogen adsorption isotherm at a temperature of 77 K by a DFT method. Pore diameter distributions obtained for the carbon carrier KB of Example C1 (hollow circle marks) and the carbon carrier KB-G2000 of Example C3 (solid circle marks) are shown in FIG. 3A. In addition, pore diameter distributions obtained for the carbon carrier C1500 of Example C5 (hollow circle marks), the carbon carrier C1500-G1900 of Example C7 (solid circle marks), and the carbon carrier C1500-G1900AO of Example 2 (solid square marks) are shown in FIG. 3B.

In each of FIG. 3A and FIG. 3B, the axis of abscissa indicates a pore diameter D (nm), and the axis of ordinate indicates a Log differential pore volume ("dV/dlogD" in the figure) (cm³/g). In addition, the pore diameter (nm) at which the Log differential pore volume became the maximum value in such pore diameter distribution of each carbon carrier was obtained as the pore mode diameter (nm) of the carbon carrier.

### [Production of Metal-supported Catalyst]

A metal-supported catalyst was produced by supporting catalyst metal particles on each of the above-mentioned carbon carriers. Specifically, 1 g of the carbon carrier obtained in each of Example C5 to Example C9 and Example 1 to Example 4, and 10 g of an aqueous solution, which contained such an amount of chloroplatinic acid (H₂PtCl₆) serving as a platinum precursor that its platinum concentration became 10 wt% (platinum content: 1 g), were mixed. First, the mixture was stirred under a gauge pressure (reduced pressure) of -0.1 MPa for 1 hour. Next, the mixture was stirred under a gauge pressure (increased pressure) of 0.15 MPa for 1 hour. Further, the mixture was stirred under normal pressure for 18 hours. After that, the resultant mixed liquid was dried under a gauge pressure (reduced pressure) of - 0.1 MPa at 100°C. Further, the mixed liquid was held in nitrogen at 150°C so that its solvent component was volatilized.

First, the resultant solid was subjected to heating treatment (gas-phase reduction treatment) in a hydrogen atmosphere (hydrogen gas: 100 vol%) at 350°C for 180 minutes. Subsequently, the treated solid was subjected to heating treatment in a nitrogen atmosphere (nitrogen gas: 100 vol%) at 700°C for 180 minutes. Thus, a metal-supported catalyst including the carbon carrier and platinum particles supported as catalyst metal particles on the carbon carrier was obtained.

### [Power Generation Test and Potential Cycle Test]

To evaluate one aspect of the performance of a metal-supported catalyst, the power generation test and potential cycle test of a fuel cell including an electrode including the metal-supported catalyst were performed. In the potential cycle test, the metal-supported catalyst was evaluated for its durability, in particular, its load fluctuation resistance (resistance to a load fluctuation). Specifically, first, a battery cathode having a catalyst layer containing a metal-supported catalyst formed thereon was produced. That is, an electrolyte (equivalent weight EW=820) in such an amount that the weight ratio thereof to a carbon carrier in the metal-supported catalyst was 1.1 was added to 0.25 g of the metal-supported catalyst produced as described above, and 2 g each of distilled water and 1-propanol were added to prepare an electrolyte solution. The electrolyte solution and 25 g of balls were loaded into a pot and mixed with a ball mill at 200 rpm for 50 minutes. Thus, a slurry-like composition for a catalyst layer containing the uniformly dispersed metal-supported catalyst was obtained.

The resultant slurry-like composition for a catalyst layer was applied onto a region having an area of 5 cm² of a gas diffusion layer ("29BC", manufactured by SGL Carbon Japan Co., Ltd.) (2.3 cm×2.3 cm) so that the content of platinum in the catalyst metal particles supported on the metal-supported catalyst per unit area of the battery electrode became 0.2 mg-Pt/cm², and was dried to form a catalyst layer on the gas diffusion layer. Thus, a battery cathode having the catalyst layer containing the metal-supported catalyst formed thereon was obtained.

Next, a fuel cell including the electrode having the catalyst layer containing the metal-supported catalyst formed thereon was produced. That is, the battery cathode having formed thereon the catalyst layer (positive electrode catalyst layer) including the metal-supported catalyst produced as described above was used as a positive electrode.

On the other hand, a negative electrode was produced as described below. 0.5 g of a commercial platinum-supported catalyst Pt/C (catalyst containing platinum particles supported on a carbon carrier: UNPC40-II, manufactured by Ishifuku Metal Industry Co., Ltd.), 10 g of 5% Nafion (trademark), 2 g of distilled water, and 25 g of balls were loaded into a pot and mixed with a ball mill at 200 rpm for 50 minutes to prepare a slurry-like Pt/C composition. A battery anode including a catalyst layer (negative electrode catalyst layer) formed of the slurry-like Pt/C composition was produced in the same manner as in the above-mentioned positive electrode except that the Pt/C composition was applied onto the gas diffusion layer (5 cm²) so that a platinum content per unit area became 0.1 mg-Pt/cm².

Then, a polymer electrolyte membrane ("Nafion (trademark) 211", manufactured by DuPont) was arranged between the above-mentioned positive electrode catalyst layer and the above-mentioned negative electrode catalyst layer, and the resultant was subjected to pressure bonding under the conditions of 150°C and 1 MPa for 3 minutes. Thus, a MEA was produced. A pair of gaskets was bonded to the MEA, and the resultant was sandwiched between a pair of separators to produce a fuel cell unit cell for a power generation test and a potential cycle test. Then, the unit cell was installed in a fuel cell automatic evaluation system (manufactured by Toyo Corporation). First, a power generation test was performed, and then a potential cycle test was performed.

In the power generation test, saturated humidified air (oxygen) was supplied at 2.5 L/min to a positive electrode side of the unit cell at a back pressure of 150 kPa (relative humidity: 100%) and saturated humidified hydrogen was supplied at 1.0 L/min to a negative electrode side of the unit cell (relative humidity: 100%), a cell temperature was set to 75°C, and an open circuit voltage was measured for 5 minutes. After that, while a cell current density was kept at each current density for 3 minutes from 4.0 A/cm² to 0 A/cm², a cell voltage was measured. Then, the voltage (mV) measured under a relative humidity of 100% at a current density of 0.2 A/cm² was obtained as a "beginning of life (BOL) (0.2 A/cm²) (100%RH)" serving as one indicator of the initial catalytic activity. In addition, the voltage (mV) measured under a relative humidity of 100% at a current density of 1.0 A/cm² was obtained as a "BOL (1.0 A/cm²) (100%RH)" serving as another indicator of the initial catalytic activity.

Subsequently, humidified air (oxygen) was supplied at 2.5 L/min to a positive electrode side of the unit cell at a back pressure of 150 kPa (relative humidity: 40%) and humidified hydrogen was supplied at 1.0 L/min to a negative electrode side of the unit cell (relative humidity: 40%), a cell temperature was set to 75°C, and an open circuit voltage was measured for 5 minutes. After that, while a cell current density was kept at each current density for 3 minutes from 4.0 A/cm² to 0 A/cm², a cell voltage was measured. Then, the voltage (mV) measured under a relative humidity of 40% at a current density of 0.2 A/cm² was obtained as a "BOL (0.2 A/cm²) (40%RH)" serving as one indicator of the initial catalytic activity under a low-humidity condition. Further, a value (mV) obtained by subtracting the "BOL (0.2 A/cm²) (40%RH)" from the "BOL (0.2 A/cm²) (100%RH)" was obtained as a "voltage reduction amount (mV)" along with a reduction in humidity.

After that, the cell temperature was set to 75°C. Saturated humidified nitrogen was supplied at 0.5 L/min to both sides of the unit cell at a back pressure of 150 kPa (relative humidity: 100%), and saturated humidified hydrogen was supplied at 0.5 L/min to an anode side of the unit cell (relative humidity: 100%). The potential cycle test was performed by repeating a rectangular wave cycle of first keeping a potential at 0.6 V for 10 seconds and then keeping the potential at 0.95 V for 10 seconds.

Then, the above-mentioned rectangular wave cycle was performed 10,000 times, and then the power generation test was performed again. In the power generation test after the potential cycle test, the voltage (mV) measured under a relative humidity of 100% at a current density of 0.2 A/cm² was obtained as an "end of life (EOL) (0.2 A/cm²) (100%RH)."

### [Start-Stop Test]

In addition, to evaluate another aspect of the performance of a metal-supported catalyst, the start-stop test of a fuel cell including an electrode including the metal-supported catalyst was performed. That is, the metal-supported catalyst was evaluated for its durability, in particular, its corrosion resistance (resistance to corrosion) by a change in voltage before and after the start-stop test. Specifically, a MEA was produced by: arranging a solid polymer electrolyte membrane (manufactured by DuPont, "Nafion (trademark) 211") between a positive electrode catalyst layer and a negative electrode catalyst layer produced in the same manner as in the above-mentioned power generation test and potential cycle test; and subjecting the resultant to pressure bonding under the conditions of 150°C and 1 MPa for 3 minutes. A pair of gaskets was bonded to the MEA, and the resultant was further sandwiched between a pair of separators. Thus, a fuel cell unit cell for a start-stop test was produced. Then, the unit cell was placed in a fuel cell automatic evaluation system (manufactured by Toyo Corporation), and the start-stop test was performed.

That is, the start-stop test was performed by repeating the following triangular wave cycle: a cell temperature was set to 80°C; saturated humidified nitrogen was supplied at 1.0 L/min to each of the two sides of the unit cell at a back pressure of 35 kPa (relative humidity: 100%); saturated humidified hydrogen was supplied at 1.0 L/min to the anode side thereof (relative humidity: 100%); and the potential thereof was scanned from 1.0 V to 1.5 V at a sweep rate of 500 mV/sec.

The above-mentioned triangular wave cycle was performed 1,000 times, and then a power generation test was performed. Then, in the power generation test after the start-stop test, the voltage (mV) measured under a relative humidity of 100% at a current density of 0.2 A/cm² was obtained as a "voltage after start-stop test (0.2 A/cm²)." Similarly, in the power generation test after the start-stop test, the voltage (mV) measured under a relative humidity of 100% at a current density of 1.0 A/cm² was obtained as a "voltage after start-stop test (1.0 A/cm²)."

### [Result]

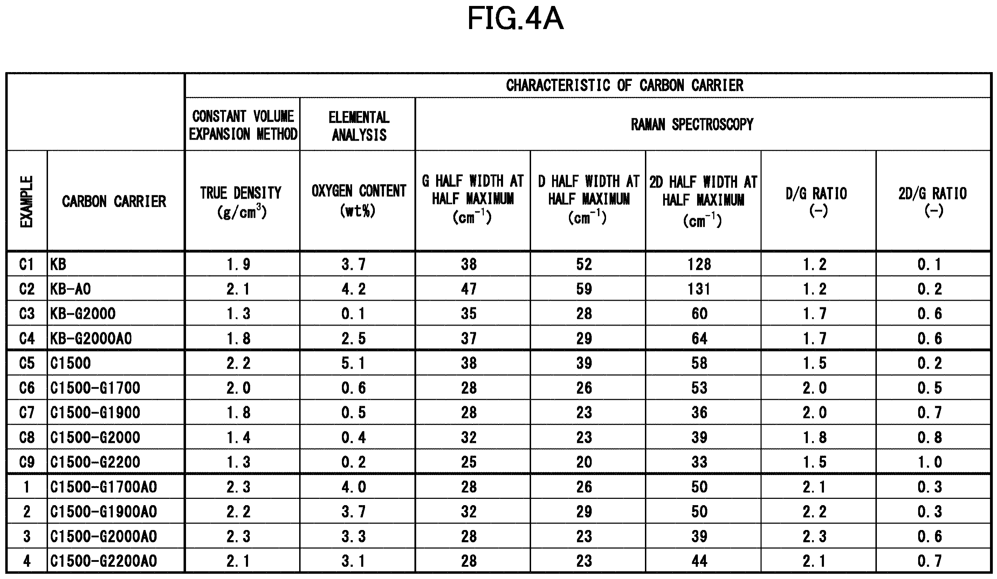

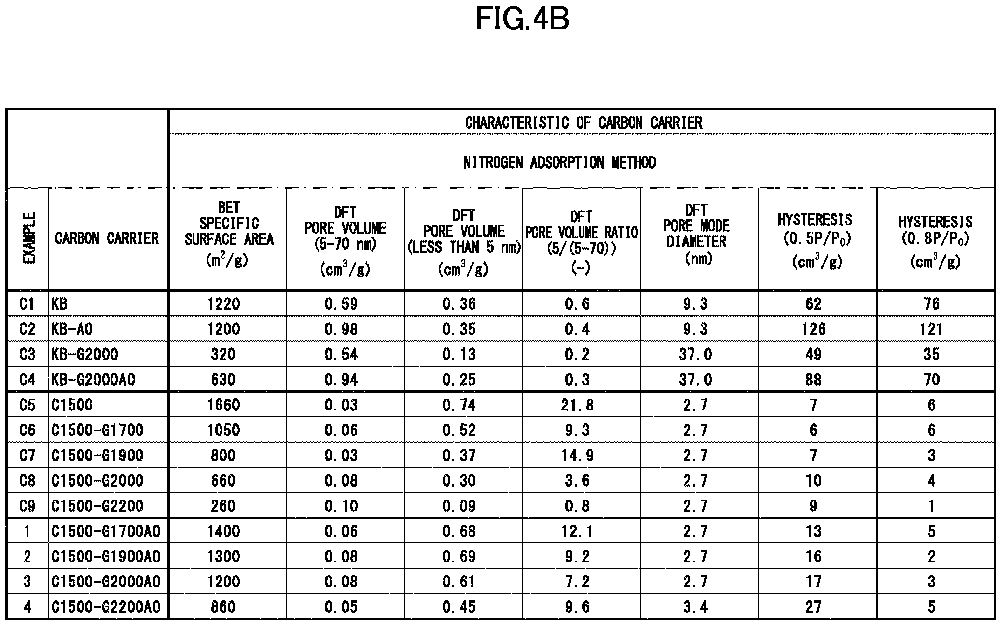

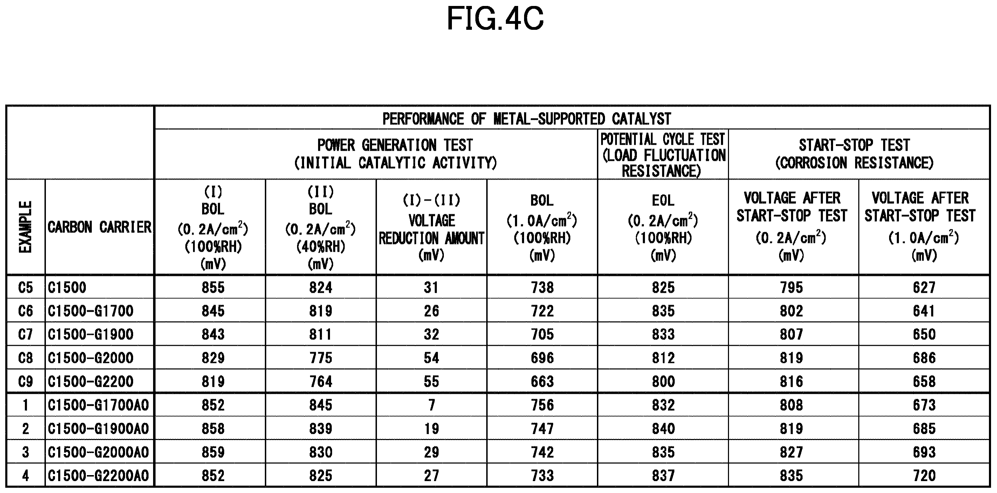

The evaluation results of the characteristics of the carbon carriers are shown in FIG. 4A and FIG. 4B. In addition, the evaluation results of the performances of the metal-supported catalysts are shown in FIG. 4C.

As shown in FIG. 4C, the BOL (0.2 A/cm²) (100%RH) of each of the metal-supported catalysts including the carbon carriers of Examples C6 to C9, which had each been subjected to the graphitization treatment but had not each been subjected to any oxidation treatment, was significantly smaller than that of Example C5 that had not been subjected to the graphitization treatment. In contrast, the BOL (0.2 A/cm²) (100%RH) of each of the metal-supported catalysts including the carbon carriers of Examples 1 to 4, which had each been subjected to the oxidation treatment after the graphitization treatment, was significantly larger than those of Examples C6 to C9, and was equal to or more than that of Example C5. Of those, the BOL (0.2 A/cm²) (100%RH) of each of the metal-supported catalysts including the carbon carriers of Examples 2 and 3 was particularly large.

The BOL (0.2 A/cm²) (40%RH) of each of Examples C6 to C9 was significantly smaller than that of Example C5. In contrast, the BOL (0.2 A/cm²) (40%RH) of each of Examples 1 to 4 was significantly larger than those of Examples C6 to C9, and was equal to or more than that of Example C5. Of those, the BOL (0.2 A/cm²) (40%RH) of each of Examples 1 to 3 was significantly larger than that of Example C5, and that of Example 1 was particularly large.

The voltage reduction amount (mV) of each of Examples C6 to C9 due to the reduction in humidity from 100%RH to 40%RH was equal to or more than that of Example C5, and in particular, those of Examples C8 and C9 were significantly large. In contrast, the voltage reduction amounts (mV) of Examples 1 to 4 were smaller than that of Example C5, and were significantly smaller than those of Examples C6 to C9, respectively. Of those, the voltage reduction amount (mV) of each of Examples 1 and 2 was significantly smaller than that of Example C5, and that of Example 1 was particularly small.

The BOL (1.0 A/cm²) (100%RH) of each of Examples C6 to C9 was significantly smaller than that of Example C5. In contrast, the BOL (1.0 A/cm²) (100%RH) of each of Examples 1 to 4 was equal to or more than that of Example C5, and was significantly larger than those of Examples C6 to C9. Of those, the BOL (1.0 A/cm²) (100%RH) of each of Examples 1 to 3 was significantly larger than that of Example C5, and that of Example 1 was particularly large.

The EOL (0.2 A/cm²) (100%RH) of each of Examples C6 and C7 was significantly larger than that of Example C5, but those of Examples C8 and C9 were significantly smaller than that of Example C5. In contrast, the EOL (0.2 A/cm²) (100%RH) of each of Examples 1 to 4 was significantly larger than that of Example C5. In addition, the EOLs (0.2 A/cm²) (100%RH) of Examples 3 and 4 were significantly larger than those of Examples C8 and C9, respectively.

The voltage after start-stop test (0.2 A/cm²) of each of Examples C6 to C9 was significantly larger than that of Example C5. The voltage after start-stop test (0.2 A/cm²) of Examples 1 to 4 were each significantly larger than that of Example C5, and were larger than those of Examples C6 to C9, respectively. Of those, the voltages after start-stop test (0.2 A/cm²) of Examples 2 to 4 were significantly larger than those of Examples C7 to C9, respectively, and that of Example 4 was particularly large.

The voltage after start-stop test (1.0 A/cm²) of each of Examples C6 to C9 was larger than that of Example C5. The voltages after start-stop test (1.0 A/cm²) of Examples 1 to 4 were each significantly larger than that of Example C5, and were significantly larger than those of Examples C6 to C9, respectively. Of those, the voltages after start-stop test (1.0 A/cm²) of Examples 2 to 4 were significantly large, and that of Example 4 was particularly large.

As can be seen from the foregoing, the metal-supported catalyst including the carbon carrier of Example 1 exhibited a small "voltage reduction amount" representing a reduction in catalytic activity along with a reduction in humidity, and exhibited high catalytic activity under low humidity reflected in the BOL (0.2 A/cm²) (40%RH). In addition, the metal-supported catalyst including the carbon carrier of Example 1 exhibited a particularly large BOL (1.0 A/cm²) (100%RH).

The metal-supported catalysts including the carbon carriers of Examples 2 and 3 each achieved both of the initial catalytic activity, which was reflected in each of the BOL (0.2 A/cm²) (100%RH) and the BOL (1.0 A/cm²) (100%RH), and the corrosion resistance of the carbon carrier, which was reflected in each of the voltage after start-stop test (0.2 A/cm²) and the voltage after start-stop test (1.0 A/cm²), at high levels.

The metal-supported catalyst including the carbon carrier of Example 4 exhibited the corrosion resistance of the carbon carrier, which was reflected in each of the voltage after start-stop test (0.2 A/cm²) and the voltage after start-stop test (1.0 A/cm²), at an extremely high level.

As shown in FIG. 4A, the true densities of the carbon carriers of Examples 1 to 4, which had each been subjected to the oxidation treatment after the graphitization treatment, were significantly larger than those of the carbon carriers of Examples C6 to C9, which had each not been subjected to the oxidation treatment, respectively. That is, the true density of each of the carbon carriers was significantly increased by the oxidation treatment. Of those, the true densities of Examples 1 to 3 were particularly large. On the other hand, the true densities of Examples C1, C3, and C4 were small.

The oxygen contents of the carbon carriers of Examples 1 to 4 were significantly larger than those of Examples C6 to C9, respectively. That is, the oxygen content of each of the carbon carriers was significantly increased by the oxidation treatment. Of those, the oxygen content of Example 1 was particularly large. On the other hand, the oxygen contents of Examples C3 and C4 were small.

The Raman G half width at half maximum of each of the carbon carriers of Examples 1 to 4 was smaller than those of Examples C1 to C5. The Raman D half width at half maximum of each of the carbon carriers of Examples 1 to 4 was significantly smaller than those of Examples C1, C2, and C5. Of those, the Raman D half width at half maximum of each of Examples 3 and 4 was particularly small. The Raman 2D half width at half maximum of each of the carbon carriers of Examples 1 to 4 was smaller than those of Examples C1 to C6.

The Raman D/G ratios of the carbon carriers of Examples 1 to 4 were larger than those of Examples C6 to C9, respectively. That is, the Raman D/G ratio of each of the carbon carriers was increased by the oxidation treatment. In addition, the Raman D/G ratios of Examples C1 to C5 were small. The Raman 2D/G ratios of the carbon carriers of Examples 1 to 4 were larger than those of Examples C1, C2, and C5. Of those, the Raman 2D/G ratios of Examples 3 and 4 were particularly large.

As shown in FIG. 4B, the BET specific surface areas of the carbon carriers of Examples 1 to 4 were larger than those of Examples C6 to C9, respectively. That is, the BET specific surface area of each of the carbon carriers was increased by the oxidation treatment. Of those, the BET specific surface area of Example 1 was particularly large.

The pore volumes (5-70 nm) of the carbon carriers of Examples 1 to 4 were significantly smaller than those of Examples C1 to C4, and were comparable to those of Examples C5 to C9. On the other hand, the pore volumes (less than 5 nm) of the carbon carriers of Examples 1 to 4 were significantly larger than those of Examples C1 to C4. In addition, the pore volumes (less than 5 nm) of Examples 1 to 4 were significantly larger than those of Examples C6 to C9, respectively. That is, the pore volume (less than 5 nm) of each of the carbon carriers was significantly increased by the oxidation treatment.

The pore volume ratios (5/(5-70)) of the carbon carriers of Examples 1 to 4 were significantly larger than those of Examples C1 to C4. In addition, the pore volume ratios (5/(5-70)) of Examples 1, 3, and 4 were significantly larger than those of Examples C6, C8, and C9, respectively. Of those, the pore volume ratio (5/(5-70)) of Example 1 was particularly large.

The pore mode diameters of the carbon carriers of Examples 1 to 4 were significantly smaller than those of Examples C1 to C4. In addition, the pore mode diameters of Examples 1 to 3 were comparable to those of Examples C5 to C9. On the other hand, the pore mode diameter of Example 4 was larger than those of Examples C5 to C9.

The hysteresis (0.5P/P₀) and hysteresis (0.8P/P₀) of the carbon carriers of Examples 1 to 4 were significantly smaller than those of Examples C1 to C4. In addition, the hysteresis (0.5P/P₀) of Examples 1 to 4 were larger than those of Examples C6 to C9. On the other hand, the hysteresis (0.8P/P₀) of Examples 1 to 4 were comparable to those of Examples C6 to C9.

## Claims

1. A carbon carrier for supporting catalyst metal particles, comprising:
a BET specific surface area of 300 m²/g or more,
a true density of 2.1 g/cm³ or more, and
a carbon structure which exhibits one or more selected from the group consisting of the following characteristics (i) and (ii) in a Raman spectrum obtained by Raman spectroscopy:
(i) a ratio of an intensity of a D band having a peak top at a Raman shift of around 1,340 cm⁻¹ to an intensity of a G band having a peak top at a Raman shift of around 1,580 cm⁻¹ is 1.6 or more; and
(ii) a ratio of an intensity of a 2D band having a peak top at a Raman shift of around 2,700 cm⁻¹ to the intensity of the G band having a peak top at a Raman shift of around 1,580 cm⁻¹ is 0.3 or more.

2. The carbon carrier according to claim 1, wherein the carbon carrier comprises the carbon structure which exhibits the characteristic (i).

3. The carbon carrier according to claim 1, wherein the carbon carrier comprises the carbon structure which exhibits the characteristic (ii).

4. The carbon carrier according to claim 1, wherein an oxygen content of the carbon carrier is 1.0 wt% or more.

5. The carbon carrier according to claim 1, wherein the carbon carrier comprises the carbon structure which exhibits, in the Raman spectrum obtained by the Raman spectroscopy, a half width at half maximum of the G band having a peak top at a Raman shift of around 1,580 cm⁻¹ of 37 cm⁻¹ or less.

6. The carbon carrier according to claim 1, wherein the carbon carrier comprises the carbon structure which exhibits, in the Raman spectrum obtained by the Raman spectroscopy, a half width at half maximum of the D band having a peak top at a Raman shift of around 1,340 cm⁻¹ of 38 cm⁻¹ or less.

7. The carbon carrier according to claim 1, wherein the carbon carrier comprises the carbon structure which exhibits, in the Raman spectrum obtained by the Raman spectroscopy, a half width at half maximum of the 2D band having a peak top at a Raman shift of around 2,700 cm⁻¹ of 57 cm⁻¹ or less.

8. The carbon carrier according to claim 1, wherein the carbon carrier has a volume of pores each having a pore diameter of 5 nm or more and 70 nm or less of 0.50 cm³/g or less.

9. The carbon carrier according to claim 1, wherein the carbon carrier has a volume of pores each having a pore diameter of less than 5 nm of 0.20 cm³/g or more.

10. The carbon carrier according to claim 1, wherein the carbon carrier has a ratio of a volume of pores each having a pore diameter of less than 5 nm to a volume of pores each having a pore diameter of 5 nm or more and 70 nm or less of 4.0 or more.

11. The carbon carrier according to claim 1, wherein the carbon carrier has a pore mode diameter of 7.0 nm or less.

12. The carbon carrier according to claim 1, wherein the carbon carrier comprises a carbon structure which exhibits, in a nitrogen adsorption isotherm obtained by a nitrogen adsorption method at a temperature of 77 K, a difference of 40 cm³/g or less, wherein the difference is obtained by subtracting a nitrogen adsorption amount from a nitrogen desorption amount at a relative pressure (P/P₀), which is a ratio of an adsorption equilibrium pressure (P) to a saturated vapor pressure (P₀), of 0.5 (-).

13. The carbon carrier according to claim 1, wherein the carbon carrier comprises a carbon structure which exhibits, in a nitrogen adsorption isotherm obtained by a nitrogen adsorption method at a temperature of 77 K, a difference of 20 cm³/g or less, wherein the difference is obtained by subtracting a nitrogen adsorption amount from a nitrogen desorption amount at a relative pressure (P/P₀), which is a ratio of an adsorption equilibrium pressure (P) to a saturated vapor pressure (P₀), of 0.8 (-).

14. A metal-supported catalyst, comprising:
the carbon carrier of any one of claims 1 to 13; and
catalyst metal particles supported on the carbon carrier.

15. An electrode, comprising the metal-supported catalyst of claim 14.

16. A battery, comprising the electrode of claim 15.
